# EUROPÄISCHE PATENTSCHRIFT

(11) **EP 4 105 517 B1**
(45) Veröffentlichungstag und Bekanntmachung des Hinweises auf die Patenterteilung: **20.08.2025**
(21) Anmeldenummer: 22174968.2
(22) Anmeldetag: 24.05.2022
(51) Int. Cl.: F16H 37/04

(54) **GETRIEBE UND LANDWIRTSCHAFTLICHES ODER INDUSTRIELLES NUTZFAHRZEUG**
TRANSMISSION AND AGRICULTURAL OR INDUSTRIAL UTILITY VEHICLE
TRANSMISSION ET VÉHICULE UTILITAIRE AGRICOLE OU INDUSTRIEL

(30) Priorität: 16.06.2021 DE 102021115610; 16.06.2021 DE 102021115606; 16.06.2021 DE 102021115607; 16.06.2021 DE 102021115608; 16.06.2021 DE 102021115609
(43) Veröffentlichungstag der Anmeldung: 21.12.2022
(73) Patentinhaber: Deere & Company, Moline, IL 61265 (US)
(72) Erfinder: SHINDE, PRADIP, 68163 Mannheim (DE); LUBBEN, JEFFREY L, 68163 Mannheim (DE)
(74) Vertreter: Stein, Stefan

(56) Entgegenhaltungen:
- EP-A2- 3 428 480
- CN-A- 110 345 210
- CN-B- 109 578 535
- DE-A1- 102008 041 205
- DE-A1- 102011 081 761
- DE-A1- 102013 209 565
- DE-A1- 102015 226 269
- US-A1- 2019 085 959

## Beschreibung

Die Erfindung betrifft ein Getriebe gemäss dem Oberbegriff des unabhängigen Anspruchs 1 und ein landwirtschaftliches oder industrielles Nutzfahrzeug gemäss dem Anspruch 10.

In landwirtschaftlichen oder industriellen Nutzfahrzeugen, bevorzugt landwirtschaftlichen oder industriellen Zugfahrzeugen, besonders bevorzugt Traktoren oder Schleppern, kommen heute eine Vielzahl unterschiedlicher Getriebe, z. B. stufenlose Getriebe (IVT), teillastschaltbare Getriebe (PPST) oder volllastschaltbare Getriebe (PST) zum Einsatz. Die Getriebe ermöglichen den Vortrieb des Nutzfahrzeugs auch unter hoher Zuglast, beispielsweise verursacht durch ein daran angebautes Arbeitsgerät wie ein Bodenbearbeitungsgerät (z.B. Pflug) oder dergleichen, über eine bloße Veränderung der Antriebsmotordrehzahl hinaus unterbrechungsfrei verändern zu können. Dabei ist im Allgemeinen das Getriebe eines Nutzfahrzeugs in eine höhere Antriebsstrangarchitektur des gesamten Nutzfahrzeugs eingebettet. Eine übliche Antriebsstrangarchitektur sieht einen Antriebsmotor oder Motor und ein Getriebe vor. Diese können entlang einer Fahrzeuglängsachse, also einer Längsachse des Nutzfahrzeugs, die eine in eine Längsrichtung des Nutzfahrzeugs verlaufenden Achse ist, oder entlang einer Vorwärtsfahrrichtung des Fahrzeugs, insbesondere in einer vorderen Hälfte des Nutzfahrzeugs, angeordnet sein. Das Nutzfahrzeug, insbesondere der Antriebsmotor, kann eine Kurbelwelle umfassen, die insbesondere in der Nähe oder entlang einer Fahrzeugmittelebene, insbesondere einer vertikalen Fahrzeugmittelebene angeordnet sein kann. Mit dem Getriebe kann eine Kraft und/oder ein Drehmoment vom Antriebsmotor an die Bodeneingriffsmitteln, beispielsweise Räder und/oder Ketten und/oder Raupen, des Nutzfahrzeugs übertragen werden (Antrieb, Traktion). Das Getriebe, insbesondere eine Hauptgetriebeeinheit, kann entlang der Fahrzeuglängsachse und/oder entlang der Fahrzeugmittelebene und/oder entgegen der Vorwärtsfahrrichtung hinter dem Antriebsmotor in Richtung des hinteren Endes des Fahrzeugs angeordnet sein, insbesondere kann die Hauptgetriebeeinheit direkt am Antriebsmotor angeordnet sein. Das Antriebselement, insbesondere die Eingangswelle, des Getriebes, insbesondere der Hauptgetriebeeinheit, kann mit der Kurbelwelle des Antriebsmotors verbunden und/oder antreibbar sein. Die Kurbelwellenachsen der Kurbelwelle des Antriebsmotors und das Antriebselement des Getriebes können koaxial zueinander ausgerichtet und/oder angeordnet sein. Alternativ können die Kurbelwellenachse und das Antriebselement zueinander parallel verschoben oder in einem Winkel zueinander angeordnet sein. Das erste Abtriebselement des Getriebes kann zum Antrieb der Bodeneingriffsmittel mit diesen direkt oder indirekt verbindbar oder verbunden sein. Dadurch kann ein Kraft- und/oder Drehmomentfluss vom Antriebsmotor über die Kurbelwelle und das Antriebselement zum Abtriebselement und weiter an eine vordere und/oder hintere Antriebsachse und somit an die Bodeneingriffsmittel herstellbar sein. CN 110345210 A discloses a 16-speed automatic transmission based on a single planetary wheel type modular design.

Nachteilig hierbei ist, dass bei diesen Nutzfahrzeugen mit der bekannten Antriebsstrangarchitektur das Getriebe zu viel Bauraum benötigt. Ein wesentlicher Nachteil sind hierbei die vielen Wellen und Zahnradsätze, die bekannte lastschaltbare Getriebe aufweisen. Dadurch beansprucht das Getriebe Bauraum, der beispielsweise für zusätzliche Bauteile und/oder eine Kabine des Nutzfahrzeugs genutzt werden könnte. Darüber hinaus weisen die bekannten Getriebe im Arbeitsbereich eine zu geringe Anzahl an Gängen und/oder einen zu kleinen Geschwindigkeitsbereich und/oder eine zu geringe Spreizung der Gänge auf. Im Speziellen fehlt eine ausreichende und optimale Anzahl an Übersetzungsverhältnissen im Arbeitsbereich der Geschwindigkeiten auf dem Feld. Die bekannten Getriebe mit vielen Schaltelementen, insbesondere Kupplungen und/oder Bremsen und/oder Schaltmuffen bzw. Synchronisatoren, sind ausserdem technisch und/oder konstruktiv aufwändig und verursachen hohe Herstellungskosten.

Der vorliegenden Erfindung liegt daher die Aufgabe zugrunde, ein Getriebe und ein Nutzfahrzeug vorzuschlagen, durch welche die vorgenannten Probleme überwunden werden. Insbesondere sollen ein Getriebe und ein Nutzfahrzeug vorgeschlagen werden, mit welchen eine Getriebevielfalt in einem Nutzfahrzeug erhöht wird und/oder welche technisch und/oder konstruktiv und/oder wirtschaftlich weniger aufwändig sind und/oder das Getriebe eine kompaktere Bauweise aufweist und/oder der Bauraum, bevorzugt im Nutzfahrzeug, besondere bevorzugt unterhalb einer Kabine und/oder zwischen Antriebsmotor und Hinterachsmodul, besser nutzbar ist und/oder die Leistung und/oder die Fahrtüchtigkeit des Getriebes und/oder Nutzfahrzeugs verbessert ist und/oder eine ausreichende Anzahl an Übersetzungsverhältnissen aufweist.

Diese Aufgabe wird durch ein Getriebe mit den Merkmalen des Anspruchs 1 und ein landwirtschaftliches oder industrielles Nutzfahrzeug mit den Merkmalen des Anspruchs 10 gelöst. Die abhängigen Ansprüche beziehen sich auf besonders vorteilhafte Ausführungsformen der Erfindung.

Erfindungsgemäß wird ein Getriebe zum Übertragen eines von einem Antriebsmotor, insbesondere einem Verbrennungsmotor oder einem Dieselmotor, erzeugten Drehmoments auf mindestens eine vordere und/oder hintere Antriebsachse eines landwirtschaftlichen oder industriellen Nutzfahrzeugs vorgeschlagen. Das Getriebe umfasst ein Antriebselement, insbesondere die Eingangswelle, und ein erstes Abtriebselement, insbesondere eine erste Ausgangswelle, und eine Hauptgetriebeeinheit und ein Zwischengetriebe und eine Reversiereinheit. Die Hauptgetriebeeinheit weist einen ersten Planetenradsatz mit einem ersten Sonnenrad, einem ersten Hohlrad, einem ersten Planetenträger und einem ersten Planetensatz, und einen zweiten Planetenradsatz mit einem zweiten Sonnenrad, und einen dritten Planetenradsatz mit einem dritten Sonnenrad und einem dritten Planentensatz umfasst, und wobei der zweite und dritte Planetenradsatz einen ersten gemeinsamen Planetensatz und ein erstes gemeinsames Hohlrad und einen ersten gemeinsamen Planetenträger auf. Das Zwischengetriebe weist einen fünften Planetenradsatz mit einem fünften Sonnenrad, einem fünften Hohlrad, einem fünften Planetenträger und einem fünften Planetensatz auf. Die Reversiereinheit umfasst einen vierten Planetenradsatz mit einem vierten Sonnenrad, einem vierten Hohlrad, einem vierten Planetenträger und einem vierten Planetensatz umfasst. Ausserdem umfasst die Hauptgetriebeeinheit genau fünf, Schaltelemente, wobei die Schaltelemente eine erste Bremse und eine zweite Bremse und eine dritte Bremse und eine erste Kupplung und eine zweite Kupplung sind. Das Zwischengetriebe weist genau zwei, Schaltelemente auf. Das Zwischengetriebe kann mindestens einen oder zwei Planetenradsätze umfassen. Mit dem Zwischengetriebe können mindestens zwei Vorwärtsgänge herstellbar sein. Die Reversiereinheit umfasst genau zwei, Schaltelemente. Die Reversiereinheit ist bevorzugt zur Änderung einer Drehrichtung des Getriebes, besonders bevorzugt zur Änderung einer Drehrichtung des ersten Abtriebselements, und insbesondere eines zweiten Abtriebselements ausgestaltet. Darüber hinaus können mit der Reversiereinheit insbesondere mindestens ein Vorwärtsgang und ein Rückwärtsgang herstellbar sein. Die Reversiereinheit umfasst mindestens einen Planetenradsatz oder mindestens einen ersten und zweiten Radsatz mit je einem Los- und Festrad. Mindestens zwei Schaltelemente der Hauptgetriebeeinheit und genau ein Schaltelement des Zwischengetriebes und genau ein Schaltelement der Reversiereinheit sind in Kombinationen von mindestens vier, insbesondere genau vier oder fünf oder sechs, Schaltelementen betätigbar, bevorzugt selektiv betätigbar, besonders bevorzugt schliessbar und lösbar und/oder einrückbar und/oder schaltbar und/oder selektiv eingreifbar, um genau zwölf Vorwärtsgänge zwischen dem Antriebselement und dem ersten Abtriebselement und/oder insbesondere dem zweiten Abtriebselement herzustellen. Darüber hinaus können zusätzlich mindestens zwölf, bevorzugt genau zwölf, Rückwärtsgänge herstellbar sein. Es kann aber auch nur ein Teil der zwölf Rückwärtsgänge, also weniger als zwölf Rückwärtsgänge, tatsächlich verwendet werden. Die Reversiereinheit ist in Richtung des Kraft- und Drehmomentflusses nach der Hauptgetriebeeinheit angeordnet. Das Antriebselement ist mit dem ersten Hohlrad verbunden ist, und das Antriebselement mit der ersten Kupplung mit dem dritten Sonnenrad lösbar verbindbar ist, und der erste Planetenträger mit der zweiten Kupplung mit dem zweiten Sonnenrad lösbar verbindbar ist.

Das erste gemeinsame Hohlrad kann mit der Reversiereinheit oder dem Zwischengetriebe, insbesondere ständig, verbunden sein, bevorzugt drehfest und/oder antreibbar verbunden sein. Die Hauptgetriebeeinheit kann aber auch ein erstes Zwischenelement, beispielsweise eine erste Zwischenwelle umfassen. Im Speziellen kann das erste Zwischenelement mit dem ersten gemeinsamen Hohlrad und der Reversiereinheit oder dem Zwischengetriebe, insbesondere ständig, verbunden sein, bevorzugt drehfest und/oder antreibbar verbunden sein.

Ebenso kann die Hauptgetriebeeinheit zumindest teilweise oder aber vollständig das Antriebselement und/oder das erste Abtriebselement umfassen. Mit der Hauptgetriebeeinheit können mindestens sechs Vorwärtsgänge zwischen dem Antriebselement und dem ersten gemeinsamen Hohlrad, bevorzugt zwischen dem Antriebselement und dem ersten Zwischenelement, herstellbar sein. Mit dem Zwischengetriebe können mindestens zwei Vorwärtsgänge herstellbar sein. Somit können mit der Hauptgetriebeeinheit und dem Zwischengetriebe insgesamt mindestens zwölf Vorwärtsgänge herstellbar sein. Mit der Reversiereinheit können ein Vorwärts- und ein Rückwärtsgang herstellbar sein. Somit können mit der Hauptgetriebeeinheit und dem Zwischengetriebe und der Reversiereinheit insgesamt mindestens zwölf Vorwärts- und zwölf Rückwärtsgänge herstellbar sein.

Mit anderen Worten, es wird ein Getriebe als Mehrstufengetriebe in Planetenbauweise vorgeschlagen, umfassend das Antriebselement, das mit einem Antriebsmotor verbunden, bevorzugt antreibbar und/oder drehfest verbunden oder verbindbar sein kann. Des Weiteren kann das Getriebe zumindest vier, insbesondere fünf oder sechs oder mehr, Planetenradsätze, mindestens zwei drehbare Wellen, das Antriebs- und das erste Abtriebselement sowie mindestens neun Schaltelemente umfassen. Die Schaltelemente des Getriebes können als Reibschaltelemente und/oder Lamellenschaltelemente ausgeführt sein. Ebenso können die Schaltelemente als formschlüssige Schaltelemente ausgeführte Schaltelemente sein. Die Schaltelemente können Bremsen und/oder Kupplungen sein. Das Betätigen, insbesondere das selektive Betätigen oder Eingreifen, der Schaltelemente des Getriebes in Kombinationen von mindestens vier Schaltelementen kann verschiedene Übersetzungsverhältnisse zwischen dem Antriebselement und dem ersten Abtriebselement und/oder dem zweiten Abtriebselement bewirken, so dass vorzugsweise mindestens zwölf Vorwärtsgänge und insbesondere genauso viele oder weniger Rückwärtsgänge herstellbar sind.

Das erste Abtriebselement kann zum Antrieb der hinteren und/oder vorderen Bodeneingriffsmittel des Nutzfahrzeugs vorgesehen sein und/oder mit einem Hinterachsmodul verbindbar sein. Dadurch kann ein Kraft- und/oder Drehmomentfluss zwischen dem ersten Abtriebselement und der hinteren und/oder vorderen Antriebsachse herstellbar sein, sodass beispielsweise eine Kraft und/oder ein Drehmoment an die hintere und/oder vordere Antriebsachse des Nutzfahrzeugs übertragen werden kann.

In einem Zustand, in welchem das Getriebe im Nutzfahrzeug eingebaut ist, kann das Getriebe, insbesondere eine Getriebelängsachse, also eine Längsachse des Getriebes, die eine in eine Längsrichtung des Getriebes verlaufende Achse ist, parallel oder koaxial zu der Fahrzeuglängsachse angeordnet sein. Die Planetenradsätze können axial betrachtet oder entlang der Getriebelängsachse angeordnet sein.

Wesentlich für die Erfindung ist, dass das Getriebe ausreichend Übersetzungen aufweist und/oder der Bauaufwand und die Baugröße, insbesondere der Bauraum, bzw. das Gewicht vorteilhafterweise optimiert sind und zudem der Wirkungsgrad hinsichtlich der Schlepp- und Verzahnungsverluste verbessert ist. In vorteilhafter Weise liegen geringe Drehmomente in den Schaltelementen und in den Planetenradsätzen des Getriebes vor, wodurch der Verschleiß des Getriebes in vorteilhafter Weise reduziert wird. Ebenso wird vorteilhafterweise durch die Ausgestaltung des Getriebes und/oder durch die geringen Momente eine konstruktiv einfache Ausgestaltung, insbesondere eine kompakte Bauweise, also ein geringes Volumen des Getriebes und/oder eine geringe Dimensionierung erreicht, sodass der vom Getriebe benötigte Bauraum und die entsprechenden Kosten reduziert werden. Darüber hinaus liegen auch geringe Drehzahlen bei den Wellen, den Schaltelementen und den Planetenradsätzen vor. Außerdem ist das Getriebe derart konzipiert, dass eine Anpassbarkeit an unterschiedliche Antriebstrangarchitekturen sowohl in Richtung des Kraft- und/oder Drehmomentflusses, als auch in räumlicher Hinsicht ermöglicht wird. Das Getriebe kann beispielsweise in Front-Quer Bauweise oder im Rahmen eines Standardantriebs in das Nutzfahrzeug eingebaut werden. Aufgrund der räumlichen Anordnung der Planetensätze kann in einem im Nutzfahrzeug eingebauten Zustand des Getriebes von Vorteil der Bauraum, insbesondere der Axial- und Radialraum, des Getriebes im Nutzfahrzeug minimiert werden. Darüber hinaus weist das Getriebe vorteilhafterweise eine geringen bzw. minimale Anzahl an Zahnrädern und Schaltelementen auf, wodurch das Getriebe, insbesondere auch in einem im Nutzfahrzeug eingebauten Zustand, vorteilhafterweise eine kompaktere und konstruktiv einfachere Bauweise aufweist und der Bauaufwand erheblich reduziert ist. In vorteilhafter Weise ergibt sich bei dem Getriebe ein guter Wirkungsgrad in den Vorwärts- und/oder Rückwärtsgängen bezüglich der Schlepp- und Verzahnungsverluste. In vorteilhafterweise Weise sind also das Getriebe und das Nutzfahrzeug insgesamt technisch und konstruktiv und wirtschaftlich weniger aufwändig. Ebenso wird zusätzlicher Bauraum für Bauteile außerhalb des Getriebes ermöglicht. Darüber hinaus kann die Kabine tiefer, also in Richtung einer Aufstandsfläche des Nutzfahrzeugs verschoben angeordnet sein, als Kabinen in bekannten Nutzfahrzeugen. Durch die erfindungsgemäße Ausgestaltung des Getriebes ergeben sich für Nutzfahrzeuge geeignete Übersetzungen sowie eine erhöhte Gesamtspreizung des Mehrstufengetriebes, wodurch eine Verbesserung des Fahrkomforts und eine signifikante Verbrauchsabsenkung bewirkt werden. Dadurch kann also vorteilhafterweise die Leistung und/oder die Fahrtüchtigkeit und/oder Strassenlage des Nutzfahrzeugs verbessert werden.

Die Planetenradsätze der Hauptgetriebeeinheit können axial betrachtet in der Reihenfolge erster Planetenradsatz, zweiter Planetenradsatz und dritter Planetenradsatz angeordnet sein. Der erste Planetenradsatz kann als ein einfacher Minus-Planetensatz ausgebildet sein. Ein Minus Planetensatz umfasst bekanntlich ein Sonnenrad, ein Hohlrad und ein Planetenträger, an dem Planetenräder drehbar gelagert, die jeweils mit Sonnenrad und Hohlrad kämmen. Hierdurch weist das Hohlrad bei festgehaltenem Planetenträger eine zum Sonnenrad entgegengesetzte Drehrichtung auf. Der erste Planetensatz kann insbesondere einen Satz von ersten Planetenrädern aufweisen. Der erste Planetensatz kann drei erste Planetenräder umfassen. Der erste Planetensatz, also die ersten Planetenräder, können am ersten Planetenträger drehbar gelagert sein. Der erste Planetensatz kann mit dem ersten Sonnenrad und dem ersten Hohlrad kämmen, sich also insbesondere in ständigem Kämmeingriff mit diesen befinden. Der dritte Planetensatz kann einen Satz von dritten Planetenrädern, insbesondere drei dritte Planetenräder, und/oder der erste gemeinsame Planetensatz einen Satz von ersten gemeinsamen Planetenrädern, insbesondere drei erste gemeinsame Planetenräder, umfassen. Der dritte Planetensatz, also die dritten Planetenräder, und der erste gemeinsame Planetensatz, also die ersten gemeinsamen Planetenräder, können am ersten gemeinsamen Planetenträger drehbar gelagert sein. Ausserdem kann der dritte Planetensatz mit dem dritten Sonnenrad und den ersten gemeinsamen Planetenrädern kämmen, sich also insbesondere in ständigem Kämmeingriff mit diesen befinden. Darüber hinaus kann der erste gemeinsame Planetensatz mit dem zweiten Sonnenrad und dem ersten gemeinsamen Hohlrad und dem dritten Planetensatz kämmen, sich also insbesondere in ständigem Kämmeingriff mit diesen befinden. Mit anderen Worten, der zweite und dritte Planetenradsatz können als ein doppelter Planetenradsatz, insbesondere als Ravigneaux und/oder Lepelletier Planetenradsatz, ausgebildet sein. Dabei kann der doppelte Planetenradsatz das zweite und dritte Sonnenrad, den dritten Planetensatz und den ersten gemeinsame Planetensatz, den ersten gemeinsamen Planetenträger und das erste gemeinsame Hohlrad umfassen. Der dritte Planetensatz und der erste gemeinsame Planetensatz können am ersten gemeinsamen Planetenträger drehbar gelagert sein. Üblicherweise werden für die Planetensätze des Getriebes, also insbesondere den ersten und dritten Planetensatz und/oder den ersten gemeinsamen und/oder einen zweiten gemeinsamen Planetensatz und/oder einen vierten und/oder fünften, jeweils drei Planetenräder verwendet. Es wäre aber auch eine andere Anzahl an Planetenrädern denkbar, beispielsweise jeweils vier oder fünf oder sechs oder mehrere Planetenräder. Die Anzahl der Planeten hat dabei vorteilhafterweise einen Einfluss auf das maximal übertragbare Drehmoment. Im Weiteren weist die Ausgestaltung alle Vorteile des erfindungsgemässen Getriebes auf.

In Ausgestaltung der Erfindung ist das Zwischengetriebe in Richtung des Kraft- und Drehmomentflusses nach der Hauptgetriebeeinheit angeordnet. Das Zwischengetriebe kann in Richtung des Kraft- und Drehmomentflusses nach der Hauptgetriebeeinheit und vor der Reversiereinheit angeordnet sein oder die Reversiereinheit kann in Richtung des Kraft- und Drehmomentflusses nach der Hauptgetriebeeinheit und vor dem Zwischengetriebe angeordnet sein. Die Hauptgetriebeeinheit und/oder das Zwischengetriebe und/oder die Reversiereinheit können entlang der Getriebelängsachse und/oder der Fahrzeuglängsachse angeordnet sein. Ebenso kann das Zwischengetriebe auch vor der Hauptgetriebeeinheit angeordnet sein. Vorteilhafterweise wird dadurch eine kompakte axiale Bauweise erreicht.

Das Antriebselement ist mit dem ersten Hohlrad und/oder der ersten Kupplung verbunden oder verbindbar sein, bevorzugt drehfest und/oder antreibbar verbunden oder verbindbar sein. Das Getriebe, insbesondere die Hauptgetriebeeinheit, kann ein erstes Verbindungselement, insbesondere eine erste Verbindungswelle umfassen. Das erste Verbindungselement kann mit dem Antriebselement und dem ersten Hohlrad und/oder der ersten Kupplung verbunden oder verbindbar sein, bevorzugt drehfest und/oder antreibbar verbunden oder verbindbar sein. Der erste Planetenträger kann mit dem dritten Sonnenrad und/oder der ersten Kupplung und/oder der zweiten Kupplung verbunden oder verbindbar sein, bevorzugt drehfest und/oder antreibbar verbunden oder verbindbar sein. Ebenso kann das Getriebe, insbesondere die Hauptgetriebeeinheit, ein zweites Verbindungselement, insbesondere eine zweite Verbindungswelle umfassen. Das zweite Verbindungselement kann mit dem ersten Planetenträger und dem dritten Sonnenrad und/oder der ersten Kupplung und/oder der zweiten Kupplung verbunden oder verbindbar sein, bevorzugt drehfest und/oder antreibbar verbunden oder verbindbar sein. Darüber hinaus kann das zweite Sonnenrad mit der zweiten Bremse und/oder der zweiten Kupplung verbunden oder verbindbar sein, insbesondere drehfest und/oder antreibbar verbunden oder verbindbar sein. Das Getriebe, insbesondere die Hauptgetriebeeinheit, kann ein drittes Verbindungselement, insbesondere eine dritte Verbindungswelle umfassen. Das dritte Verbindungselement kann mit dem zweiten Sonnenrad und/oder der zweiten Bremse und/oder der zweiten Kupplung verbunden oder verbindbar sein, bevorzugt drehfest und/oder antreibbar verbunden oder verbindbar sein. Ebenso kann der erste gemeinsame Planetenträger mit der dritten Bremse verbunden oder verbindbar sein, insbesondere drehfest und/oder antreibbar verbunden oder verbindbar sein. Das Getriebe, insbesondere die Hauptgetriebeeinheit, kann ein viertes Verbindungselement, insbesondere eine vierte Verbindungswelle umfassen. Das vierte Verbindungselement kann mit der dritten Bremse und/oder dem ersten gemeinsamen Planetenträger verbunden oder verbindbar sein, bevorzugt drehfest und/oder antreibbar verbunden oder verbindbar sein. Das erste Sonnenrad kann mit der ersten Bremse gegen Drehung haltbar sein, bevorzugt lösbar gegen Drehung haltbar sein. Das erste Sonnenrad kann mit der ersten Bremse an ein Hauptgetriebegehäuse koppelbar und/oder lösbar mit dem Hauptgetriebegehäuse verbindbar sein, bevorzugt lösbar gegen Drehung haltbar sein. Das Antriebselement, und insbesondere das erste Verbindungselement, ist mit der ersten oder über die erste Kupplung mit dem ersten Planetenträger und/oder dem dritten Sonnenrad und/oder der zweiten Kupplung und/oder insbesondere dem zweiten Verbindungselement lösbar verbindbar, insbesondere lösbar drehfest und/oder antreibbar verbindbar. Die erste Kupplung kann also ausgebildet sein, das Antriebselement, und insbesondere das erste Verbindungselement, mit dem ersten Planetenträger und/oder dem dritten Sonnenrad und/oder der zweiten Kupplung und/oder insbesondere dem zweiten Verbindungselement zu koppeln. Der erste Planetenträger kann mit dem dritten Sonnenrad verbunden sein, insbesondere drehfest und/oder antreibbar verbunden sein, bevorzugt mit dem oder über das zweite Verbindungselement. Der erste Planetenträger, und insbesondere das zweite Verbindungselement, ist mit der zweiten oder über die zweite Kupplung mit dem zweiten Sonnenrad und/oder der zweiten Bremse und/oder insbesondere dem dritten Verbindungselement lösbar verbindbar, insbesondere lösbar drehfest und/oder antreibbar verbindbar. Die zweite Kupplung kann also ausgebildet sein, den ersten Planetenträger, und insbesondere das zweite Verbindungselement, mit dem zweiten Sonnenrad und/oder der zweiten Bremse und/oder insbesondere dem dritten Verbindungselement zu koppeln. Das zweite Sonnenrad, und insbesondere das dritte Verbindungselement, kann mit der zweiten Bremse gegen Drehung haltbar sein, bevorzugt lösbar gegen Drehung haltbar sein. Das zweite Sonnenrad kann mit der zweiten Bremse an ein Hauptgetriebegehäuse koppelbar und/oder mit dem Hauptgetriebegehäuse lösbar verbindbar sein, bevorzugt lösbar gegen Drehung haltbar sein. Die zweite Bremse kann also ausgebildet sein, das zweite Sonnenrad, und insbesondere das dritte Verbindungselement, gegen Drehung zu halten. Der erste gemeinsame Planetenträger und/oder der erste gemeinsame Planetensatz und/oder der dritte Planetensatz, und insbesondere das vierte Verbindungselement, können mit der dritten Bremse gegen Drehung haltbar, bevorzugt lösbar gegen Drehung haltbar. Der erste gemeinsame Planetenträger und/oder der erste gemeinsame Planetensatz und/oder der dritte Planetensatz, und insbesondere das vierte Verbindungselement, können mit der dritten Bremse an das Hauptgetriebegehäuse koppelbar und/oder mit dem Hauptgetriebegehäuse lösbar verbindbar sein, bevorzugt lösbar gegen Drehung haltbar sein. In einer weiteren Ausgestaltung kann das Antriebselement mit dem ersten Planetenträger und/oder der ersten Kupplung verbunden oder verbindbar sein, bevorzugt drehfest und/oder antreibbar verbunden oder verbindbar sein. Das Getriebe, insbesondere die Hauptgetriebeeinheit, kann ein erstes Verbindungselement, insbesondere eine erste Verbindungswelle umfassen. Das erste Verbindungselement kann mit dem Antriebselement und dem ersten Planetenträger und/oder der ersten Kupplung verbunden oder verbindbar sein, bevorzugt drehfest und/oder antreibbar verbunden oder verbindbar sein. Das erste Hohlrad kann mit dem dritten Sonnenrad und/oder der ersten Kupplung und/oder der zweiten Kupplung verbunden sein, bevorzugt drehfest und/oder antreibbar verbunden sein. Ebenso kann das Getriebe, insbesondere die Hauptgetriebeeinheit, ein zweites Verbindungselement, insbesondere eine zweite Verbindungswelle umfassen. Das zweite Verbindungselement kann mit dem ersten Hohlrad und/oder dem dritten Sonnenrad und/oder der ersten Kupplung und/oder der zweiten Kupplung verbunden oder verbindbar sein kann, bevorzugt drehfest und/oder antreibbar verbunden oder verbindbar sein. Darüber hinaus kann die zweite Sonne mit der zweiten Bremse und/oder der zweiten Kupplung verbunden oder verbindbar sein, insbesondere drehfest und/oder antreibbar verbunden oder verbindbar sein. Das Getriebe, insbesondere die Hauptgetriebeeinheit, kann ein drittes Verbindungselement, insbesondere eine dritte Verbindungswelle umfassen. Das dritte Verbindungselement kann mit der zweiten Bremse und/oder der zweiten Kupplung und/oder dem zweiten Sonnenrad verbunden oder verbindbar sein, bevorzugt drehfest und/oder antreibbar verbunden oder verbindbar sein. Ebenso kann der erste gemeinsame Planetenträger mit der dritten Bremse verbunden oder verbindbar sein, insbesondere drehfest und/oder antreibbar verbunden oder verbindbar sein. Das Getriebe, insbesondere die Hauptgetriebeeinheit, kann ein viertes Verbindungselement, insbesondere eine vierte Verbindungswelle umfassen. Das vierte Verbindungselement kann mit der dritten Bremse und/oder dem ersten gemeinsamen Planetenträger verbunden oder verbindbar sein, bevorzugt drehfest und/oder antreibbar verbunden oder verbindbar sein. Das erste Sonnenrad kann mit der ersten Bremse gegen Drehung haltbar, bevorzugt lösbar gegen Drehung haltbar sein. Das erste Sonnenrad kann mit der ersten Bremse an das Hauptgetriebegehäuse koppelbar und/oder mit dem Hauptgetriebegehäuse lösbar verbindbar, bevorzugt lösbar gegen Drehung haltbar sein. Das Antriebselement, und insbesondere das erste Verbindungselement, kann mit der ersten oder über die erste Kupplung mit dem ersten Hohlrad und/oder dem dritten Sonnenrad und/oder der zweiten Kupplung und/oder insbesondere dem zweiten Verbindungselement lösbar verbindbar sein, insbesondere lösbar drehfest und/oder antreibbar verbindbar sein. Die erste Kupplung kann also ausgebildet sein, das Antriebselement, und insbesondere das erste Verbindungselement, mit dem ersten Hohlrad und/oder dem dritten Sonnenrad und/oder der zweiten Kupplung und/oder insbesondere dem zweiten Verbindungselement zu koppeln. Das erste Hohlrad kann mit dem dritten Sonnenrad verbunden sein, insbesondere mit dem oder über das zweite Verbindungselement. Das erste Hohlrad, und insbesondere das zweite Verbindungselement, kann mit der zweiten oder über die zweite Kupplung mit dem zweiten Sonnenrad und/oder der zweiten Bremse, und insbesondere dem dritten Verbindungselement, lösbar verbindbar sein, insbesondere lösbar drehfest und/oder antreibbar verbindbar sein. Die zweite Kupplung kann also ausgebildet sein, das erste Hohlrad, und insbesondere das zweite Verbindungselement, mit dem zweiten Sonnenrad und/oder der zweiten Bremse, und insbesondere dem dritten Verbindungselement zu koppeln. Das zweite Sonnenrad, und insbesondere das dritte Verbindungselement, kann mit der zweiten Bremse gegen Drehung haltbar sein, bevorzugt lösbar gegen Drehung haltbar sein. Das zweite Sonnenrad kann mit der zweiten Bremse an ein Hauptgetriebegehäuse koppelbar und/oder mit dem Hauptgetriebegehäuse lösbar verbindbar sein, bevorzugt lösbar gegen Drehung haltbar sein. Die zweite Bremse kann also ausgebildet sein, das zweite Sonnenrad, und insbesondere das dritte Verbindungselement, gegen Drehung zu halten. Der erste gemeinsame Planetenträger und/oder der erste gemeinsame Planetensatz und/oder der dritte Planetensatz, und insbesondere das vierte Verbindungselement, können mit der dritten Bremse gegen Drehung haltbar sein, bevorzugt lösbar gegen Drehung haltbar sein. Der erste gemeinsame Planetenträger und/oder der erste gemeinsame Planetensatz und/oder der dritte Planetensatz, und insbesondere das vierte Verbindungselement, kann mit der dritten Bremse an das Hauptgetriebegehäuse koppelbar und/oder mit dem Hauptgetriebegehäuse lösbar verbindbar sein, bevorzugt lösbar gegen Drehung haltbar sein. In einer weiteren Ausgestaltung kann das Antriebselement mit dem ersten Sonnenrad verbunden sein, bevorzugt drehfest und/oder antreibbar verbunden sein. Das erste Sonnenrad kann beispielsweise als Festrad auf dem Antriebselement ausgebildet sein oder über eine Welle mit dem Antriebselement verbunden sein oder mit einem weiteren auf dem Antriebselement drehfest angeordnetes Festrad kämmend antriebsverbunden sein. Das Getriebe, insbesondere die Hauptgetriebeeinheit, kann ein erstes Verbindungselement, insbesondere eine erste Verbindungswelle umfassen. Das erste Verbindungselement kann mit dem Antriebselement und/oder der ersten Kupplung verbunden oder verbindbar sein, bevorzugt drehfest und/oder antreibbar verbunden oder verbindbar sein. Der erste Planetenträger kann mit dem dritten Sonnenrad und/oder der ersten Kupplung und/oder der zweiten Kupplung verbunden oder verbindbar sein, bevorzugt drehfest und/oder antreibbar verbunden oder verbindbar sein. Ebenso kann das Getriebe, insbesondere die Hauptgetriebeeinheit, ein zweites Verbindungselement, insbesondere eine zweite Verbindungswelle umfassen. Das zweite Verbindungselement kann mit dem ersten Planetenträger und/oder dem dritten Sonnenrad und/oder der ersten Kupplung und/oder der zweiten Kupplung verbunden oder verbindbar sein kann, bevorzugt drehfest und/oder antreibbar verbunden oder verbindbar sein. Darüber hinaus kann das zweite Sonnenrad mit der zweiten Bremse und/oder der zweiten Kupplung verbunden oder verbindbar sein, insbesondere drehfest und/oder antreibbar verbunden oder verbindbar sein. Das Getriebe, insbesondere die Hauptgetriebeeinheit, kann ein drittes Verbindungselement, insbesondere eine dritte Verbindungswelle umfassen. Das dritte Verbindungselement kann mit der zweiten Bremse und/oder der zweiten Kupplung und/oder dem zweiten Sonnenrad verbunden oder verbindbar sein, bevorzugt drehfest und/oder antreibbar verbunden oder verbindbar sein. Ebenso kann der erste gemeinsame Planetenträger mit der dritten Bremse verbunden oder verbindbar sein, insbesondere drehfest und/oder antreibbar verbunden oder verbindbar sein. Das Getriebe, insbesondere die Hauptgetriebeeinheit, kann ein viertes Verbindungselement, insbesondere eine vierte Verbindungswelle umfassen. Das vierte Verbindungselement kann mit der dritten Bremse und/oder dem ersten gemeinsamen Planetenträger verbunden oder verbindbar sein, bevorzugt drehfest und/oder antreibbar verbunden oder verbindbar sein. Das erste Hohlrad kann mit der ersten Bremse gegen Drehung haltbar, bevorzugt lösbar gegen Drehung haltbar sein. Das erste Hohlrad kann mit der ersten Bremse an das Hauptgetriebegehäuse koppelbar und/oder mit dem Hauptgetriebegehäuse lösbar verbindbar, bevorzugt lösbar gegen Drehung haltbar sein. Das Antriebselement, und insbesondere das erste Verbindungselement, kann mit der ersten oder über die erste Kupplung mit dem ersten Planetenträger und/oder dem dritten Sonnenrad und/oder der zweiten Kupplung und/oder insbesondere dem zweiten Verbindungselement lösbar verbindbar sein, insbesondere lösbar drehfest und/oder antreibbar verbindbar sein. Die erste Kupplung kann also ausgebildet sein, das Antriebselement, und insbesondere das erste Verbindungselement, mit dem ersten Hohlrad und/oder dem dritten Sonnenrad und/oder der zweiten Kupplung und/oder insbesondere dem zweiten Verbindungselement zu koppeln. Der erste Planetenträger kann mit dem dritten Sonnenrad verbunden sein, insbesondere drehfest und/oder antreibbar verbunden sein, bevorzugt mit dem oder über das zweite Verbindungselement. Der erste Planetenträger, und insbesondere das zweite Verbindungselement, kann mit der zweiten oder über die zweite Kupplung mit dem zweiten Sonnenrad und/oder der zweiten Bremse und/oder insbesondere dem dritten Verbindungselement lösbar verbindbar sein, insbesondere lösbar drehfest und/oder antreibbar verbindbar sein. Die zweite Kupplung kann also ausgebildet sein, den ersten Planetenträger, insbesondere das zweite Verbindungselement, mit dem zweiten Sonnenrad und/oder der zweiten Bremse und/oder insbesondere dem dritten Verbindungselement zu koppeln. Das zweite Sonnenrad, und insbesondere das dritte Verbindungselement, kann mit der zweiten Bremse gegen Drehung haltbar sein, bevorzugt lösbar gegen Drehung haltbar sein. Das zweite Sonnenrad kann mit der zweiten Bremse an ein Hauptgetriebegehäuse koppelbar und/oder mit dem Hauptgetriebegehäuse lösbar verbindbar sein, bevorzugt lösbar gegen Drehung haltbar sein. Die zweite Bremse kann also insbesondere ausgebildet sein, das zweite Sonnenrad, und insbesondere das dritte Verbindungselement, gegen Drehung zu halten. Der erste gemeinsame Planetenträger und/oder der erste gemeinsame Planetensatz und/oder der dritte Planetensatz, und insbesondere das vierte Verbindungselement, können mit der dritten Bremse gegen Drehung haltbar, bevorzugt lösbar gegen Drehung haltbar. Der erste gemeinsame Planetenträger und/oder der erste gemeinsame Planetensatz und/oder der dritte Planetensatz und/oder insbesondere das vierte Verbindungselement können mit der dritten Bremse an das Hauptgetriebegehäuse koppelbar und/oder mit dem Hauptgetriebegehäuse lösbar verbindbar sein, bevorzugt lösbar gegen Drehung haltbar sein. **In** einer weiteren vorteilhaften Ausgestaltung kann das Antriebselement mit dem ersten Planetenträger verbunden sein, bevorzugt drehfest und/oder antreibbar verbunden sein. Das Getriebe, insbesondere die Hauptgetriebeeinheit, kann ein erstes Verbindungselement, insbesondere eine erste Verbindungswelle umfassen. Das erste Verbindungselement kann mit dem Antriebselement und dem ersten Planetenträger verbunden sein, bevorzugt drehfest und/oder antreibbar verbunden sein. Der erste Planetenträger kann mit der ersten Kupplung verbunden oder verbindbar sein, bevorzugt drehfest und/oder antreibbar verbunden oder verbindbar sein. Das Getriebe, insbesondere die Hauptgetriebeeinheit, kann ein zweites Verbindungselement, insbesondere eine zweite Verbindungswelle umfassen. Das zweite Verbindungselement kann mit der ersten Kupplung und dem ersten Planetenträger verbunden oder verbindbar sein, bevorzugt drehfest und/oder antreibbar verbunden oder verbindbar sein. Das erste Sonnenrad kann mit dem dritten Sonnenrad und/oder der ersten Kupplung und/oder der zweiten Kupplung verbunden oder verbindbar sein, bevorzugt drehfest und/oder antreibbar verbunden oder verbindbar sein. Ebenso kann das Getriebe, insbesondere die Hauptgetriebeeinheit, ein drittes Verbindungselement, insbesondere eine dritte Verbindungswelle umfassen. Das dritte Verbindungselement kann mit dem ersten Sonnenrad und/oder dem dritten Sonnenrad und/oder der ersten Kupplung und/oder der zweiten Kupplung verbunden oder verbindbar sein kann, bevorzugt drehfest und/oder antreibbar verbunden oder verbindbar sein. Darüber hinaus kann die zweite Sonne mit der zweiten Bremse und/oder der zweiten Kupplung verbunden oder verbindbar sein, insbesondere drehfest und/oder antreibbar verbunden oder verbindbar sein. Das Getriebe, insbesondere die Hauptgetriebeeinheit, kann ein viertes Verbindungselement, insbesondere eine vierte Verbindungswelle umfassen. Das vierte Verbindungselement kann mit der zweiten Bremse und/oder der zweiten Kupplung und dem zweiten Sonnenrad verbunden oder verbindbar sein, bevorzugt drehfest und/oder antreibbar verbunden oder verbindbar sein. Ebenso kann der erste gemeinsame Planetenträger mit der dritten Bremse verbunden oder verbindbar sein, insbesondere drehfest verbunden oder verbindbar sein. Das Getriebe, insbesondere die Hauptgetriebeeinheit, kann ein fünftes Verbindungselement, insbesondere eine fünfte Verbindungswelle umfassen. Das fünfte Verbindungselement kann mit der dritten Bremse und/oder dem ersten gemeinsamen Planetenträger verbunden oder verbindbar sein, bevorzugt drehfest und/oder antreibbar verbunden oder verbindbar sein. Das erste Hohlrad kann mit der ersten Bremse gegen Drehung haltbar, bevorzugt lösbar gegen Drehung haltbar sein. Das erste Hohlrad kann mit der ersten Bremse an das Hauptgetriebegehäuse koppelbar und/oder mit dem Hauptgetriebegehäuse lösbar verbindbar, bevorzugt lösbar gegen Drehung haltbar sein. Der erste Planetenträger, und insbesondere das zweite Verbindungselement, kann mit der ersten oder über die erste Kupplung mit dem ersten Sonnenrad und/oder dem dritten Sonnenrad und/oder der zweiten Kupplung und/oder insbesondere dem dritten Verbindungselement lösbar verbindbar, insbesondere lösbar drehfest und/oder antreibbar verbindbar sein. Die erste Kupplung kann also ausgebildet sein, den ersten Planetenträger, und insbesondere das zweite Verbindungselement, mit dem ersten Sonnenrad und/oder dem dritten Sonnenrad und/oder der zweiten Kupplung und/oder insbesondere dem dritten Verbindungselement zu koppeln. Das erste Sonnenrad kann mit dem dritten Sonnenrad verbunden sein, insbesondere drehfest und/oder antreibbar verbunden sein, bevorzugt mit dem oder über das dritte Verbindungselement. Das erste Sonnenrad, und insbesondere das dritte Verbindungselement, und/oder die erste Kupplung kann mit der zweiten oder über die zweite Kupplung mit dem zweiten Sonnenrad und/oder der zweiten Bremse und/oder insbesondere dem vierten Verbindungselement lösbar verbindbar sein, insbesondere lösbar drehfest und/oder antreibbar verbindbar sein. Die zweite Kupplung kann also ausgebildet sein, das erste Sonnenrad, und insbesondere das dritte Verbindungselement, und/oder die erste Kupplung mit dem zweiten Sonnenrad und/oder der zweiten Bremse und/oder insbesondere dem dritten Verbindungselement zu koppeln. Das zweite Sonnenrad, und insbesondere das vierte Verbindungselement, kann mit der zweiten Bremse gegen Drehung haltbar sein, bevorzugt lösbar gegen Drehung haltbar sein. Das zweite Sonnenrad, und insbesondere das vierte Verbindungselement, kann mit der zweiten Bremse an ein Hauptgetriebegehäuse koppelbar und/oder mit dem Hauptgetriebegehäuse lösbar verbindbar sein, bevorzugt lösbar gegen Drehung haltbar sein. Die zweite Bremse kann also ausgebildet sein, das zweite Sonnenrad, und insbesondere das vierte Verbindungselement, gegen Drehung zu halten. Der erste gemeinsame Planetenträger und/oder der erste gemeinsame Planetensatz und/oder der dritte Planetensatz, und insbesondere das fünfte Verbindungselement, können mit der dritten Bremse gegen Drehung haltbar, bevorzugt lösbar gegen Drehung haltbar sein.

Der erste gemeinsame Planetenträger und/oder der erste gemeinsame Planetensatz und/oder der dritte Planetensatz und/oder insbesondere das fünfte Verbindungselement können mit der dritten Bremse an das Hauptgetriebegehäuse koppelbar und/oder mit dem Hauptgetriebegehäuse lösbar verbindbar sein, bevorzugt lösbar gegen Drehung haltbar sein.

Die Schaltelemente der Reversiereinheit sind eine dritte Kupplung und eine vierte Bremse. Die Reversiereinheit kann parallel oder koaxial zum Antriebselement und/oder dem ersten Abtriebselement angeordnet sein. Der vierte Planetensatz kann einen Satz von vierten Planetenrädern aufweisen, insbesondere drei vierte Planetenräder. Die vierten Planetenräder können am vierten Planetenträger drehbar gelagert sein. Der vierte Planetensatz, also insbesondere der Satz von vierten Planetenrädern, kann mit dem vierten Sonnenrad und dem vierten Hohlrad kämmen, sich also insbesondere in ständigem Kämmeingriff mit diesen befinden. Die Reversiereinheit kann genau zwei Schaltelemente umfassen, die betätigbar sind, bevorzugt selektiv betätigbar, besonders bevorzugt schliessbar und lösbar und/oder einrückbar und/oder schaltbar und/oder selektiv eingreifbar sind, um das erste gemeinsame Hohlrad, und insbesondere das erste Zwischenelement, mit dem vierten Sonnenrad zu verbinden oder um das vierte Hohlrad gegen Drehung zu halten. Das erste gemeinsame Hohlrad, und insbesondere das erste Zwischenelement, kann mit dem vierten Planetenträger und/oder der dritten Kupplung verbunden oder verbindbar sein, bevorzugt drehfest und/oder antreibbar verbunden oder verbindbar sein. Das vierte Sonnenrad kann mit einem fünften Sonnenrad und/oder der dritten Kupplung und/oder einer vierten Kupplung verbunden oder verbindbar sein, bevorzugt drehfest und/oder antreibbar verbunden oder verbindbar sein. Das Getriebe, insbesondere die Reversiereinheit, kann ein sechstes Verbindungselement, insbesondere eine sechste Verbindungswelle umfassen. Das sechste Verbindungselement kann mit dem vierten Sonnenrad und einem fünften Sonnenrad und/oder der dritten Kupplung und/oder einer vierten Kupplung verbunden oder verbindbar sein, bevorzugt drehfest und/oder antreibbar verbunden oder verbindbar sein. Der vierte Planetenträger und das erste gemeinsame Hohlrad, und insbesondere das erste Zwischenelement, können mit der dritten oder über die dritte Kupplung mit dem vierten Sonnenrad und/oder insbesondere dem sechsten Verbindungselement und/oder einem fünften Sonnenrad lösbar verbindbar sein, insbesondere lösbar drehfest und/oder antreibbar verbindbar sein. Die dritte Kupplung kann also ausgebildet sein, den vierten Planetenträger und das erste gemeinsame Hohlrad, und insbesondere das erste Zwischenelement, mit dem vierten Sonnenrad und/oder insbesondere dem sechsten Verbindungselement und/oder einem fünften Sonnenrad zu koppeln. Das vierte Hohlrad kann mit der vierten Bremse gegen Drehung haltbar, bevorzugt lösbar gegen Drehung haltbar sein. Das vierte Hohlrad kann mit der vierten Bremse an ein Gehäuse der Reversiereinheit, also einem Reversiereinheitsgehäuse, koppelbar und/oder mit diesem lösbar verbindbar sein, bevorzugt lösbar gegen Drehung haltbar sein. Die vierte Bremse kann also ausgebildet sein, das vierte Hohlrad gegen Drehung zu halten. Aufgrund der Kombination der Hauptgetriebeeinheit mit der Reversiereinheit werden vorteilhafterweise, die oben genannten erfindungsgemässen Vorteile erreicht. Darüber hinaus weist die Reversiereinheit aufgrund der beschriebenen Planetenbauweise vorteilhafterweise eine geringe axiale Baulänge auf. Dies wirkt sich insbesondere auf die axiale Baulänge des Getriebes und/oder den Bauraum des Getriebes, insbesondere in einem Zustand, in welchem das Getriebe in das Nutzfahrzeug eingebaut ist, insgesamt vorteilhaft aus.

Das Zwischengetriebe kann genau zwei Schaltelemente umfassen. Die Schaltelemente des Zwischengetriebes sind eine vierte Kupplung und eine fünfte Kupplung. Das Getriebe, insbesondere das Zwischengetriebe, kann ein zweites Zwischenelement teilweise oder auch vollständig umfassen. Der fünfte Planetensatz kann einen Satz von fünften Planetenrädern aufweisen, insbesondere drei fünfte Planetenräder. Die fünften Planetenräder können am fünften Planetenträger drehbar gelagert sein. Der fünfte Planetensatz, also insbesondere der Satz von fünften Planetenrädern, kann mit dem fünften Sonnenrad und dem fünften Hohlrad kämmen, sich also insbesondere in ständigem Kämmeingriff mit diesen befinden. Darüber hinaus kann das Zwischengetriebe parallel oder koaxial zum Antriebselement und/oder dem ersten Abtriebselement angeordnet sein. Im Speziellen kann das Zwischengetriebe das erste Abtriebselement zumindest teilweise oder vollständig umfassen. Die zwei Schaltelemente des Zwischengetriebes sind betätigbar, bevorzugt selektiv betätigbar, besonders bevorzugt schliessbar und lösbar und/oder einrückbar und/oder schaltbar und/oder selektiv eingreifbar sind, um das fünfte Sonnenrad oder den fünften Planetensatz und/oder den fünften Planetenträger mit dem zweiten Zwischenelement und/oder insbesondere dem ersten Abtriebselement zu verbinden und/oder zu koppeln, insbesondere lösbar drehfest und/oder antreibbar zu verbinden. Das fünfte Sonnenrad kann mit dem vierten Sonnenrad und/oder der dritten Kupplung und/oder der vierten Kupplung verbunden oder verbindbar sein, bevorzugt drehfest und/oder antreibbar verbunden oder verbindbar sein. Das sechste Verbindungselement kann dem vierten und fünften Sonnenrad und/oder der dritten Kupplung und/oder der vierten Kupplung verbunden oder verbindbar sein, bevorzugt drehfest und/oder antreibbar verbunden oder verbindbar sein. Im Speziellen können die Reversiereinheit und/oder das Zwischengetriebe das sechste Verbindungselement umfassen. Das fünfte Sonnenrad und das vierte Sonnenrad, und insbesondere das sechste Verbindungselement, können mit der vierten oder über die vierte Kupplung mit dem zweiten Zwischenelement und/oder dem ersten Abtriebselement lösbar verbindbar sein, insbesondere lösbar drehfest und/oder antreibbar verbindbar sein. Die vierte Kupplung kann also ausgebildet sein, das fünfte Sonnenrad und das vierte Sonnenrad, und insbesondere das sechste Verbindungselement, mit dem zweiten Zwischenelement und/oder dem ersten Abtriebselement zu koppeln. Ausserdem kann der fünfte Planetenträger mit der fünften Kupplung verbunden oder verbindbar sein, insbesondere drehfest und/oder antreibbar verbunden oder verbindbar sein. Das Getriebe, insbesondere das Zwischengetriebe, kann ein siebtes Verbindungselement, insbesondere eine siebte Verbindungswelle umfassen. Das siebte Verbindungselement kann mit der fünften Kupplung und/oder dem fünften Planetenträger verbunden oder verbindbar sein, bevorzugt drehfest verbunden oder verbindbar sein. Der fünfte Planetenträger und/oder der fünfte Planetensatz, und insbesondere das siebte Verbindungselement, können mit der fünften oder über die fünfte Kupplung mit dem ersten Abtriebselement und/oder dem zweiten Zwischenelement lösbar verbindbar sein, insbesondere lösbar drehfest und/oder antreibbar verbindbar sein. Die fünfte Kupplung kann also ausgebildet sein, den fünften Planetenträger, und insbesondere das siebte Verbindungselement, mit dem ersten Abtriebselement und/oder dem zweiten Zwischenelement zu koppeln. Das fünfte Hohlrad kann gegen Drehung gehalten sein. Das fünfte Hohlrad kann an ein Gehäuse des Zwischengetriebes, also einem Zwischengetriebegehäuse, gekoppelt und/oder mit diesem verbunden sein, bevorzugt gegen Drehung gehalten sein. Aufgrund der Kombination der Hauptgetriebeeinheit mit dem Zwischengetriebe werden vorteilhafterweise, die oben genannten erfindungsgemässen Vorteile erreicht. Darüber hinaus weist das Zwischengetriebe aufgrund der beschriebenen Planetenbauweise vorteilhafterweise eine geringe axiale Baulänge auf. Dies wirkt sich insbesondere auf die axiale Baulänge des Getriebes und/oder den Bauraum des Getriebes, insbesondere in einem Zustand, in welchem das Getriebe in das Nutzfahrzeug eingebaut ist, insgesamt vorteilhaft aus.

In einer vorteilhaften Ausführungsform ist das erste Abtriebselement mit dem zweiten Zwischenelement antreibbar verbunden oder verbindbar, und insbesondere das erste Abtriebselement mit dem zweiten Zwischenelement antreibbar. Bevorzugt können das zweite Zwischenelement und das erste Abtriebselement mit einem Zahnradsatz koppelbar sein. Dazu kann das erste Abtriebselement über den oder mit dem Zahnradsatz antreibbar sein. Der Zahnradsatz kann zwei permanent kämmende Abtriebsräder, ein erstes und ein zweites Abtriebsrad umfassen, die als Festräder ausgebildet sein können. Das erste Abtriebsrad kann drehfest mit dem zweiten Zwischenelement und das zweite Abtriebsrad drehfest mit dem ersten Abtriebselement verbunden sein. Das zweite Abtriebselement kann mit einer Abtriebskupplung verbunden oder verbindbar sein, insbesondere lösbar drehfest und/oder antreibbar verbunden oder verbindbar sein. Die Abtriebskupplung kann mit einem dritten Abtriebsrad drehfest verbunden sein. Das dritte Abtriebsrad kann permanent mit dem zweiten Abtriebsrad kämmen. Das zweite Abtriebselement kann mit dem ersten Abtriebselement antreibbar verbunden oder verbindbar sein, und insbesondere das zweite Abtriebselement mit dem ersten Abtriebselement antreibbar sein. Dadurch kann vorteilhafterweise eine modulare und/oder kompakte Bauweise des Getriebes erreicht werden, da die einzelnen Einheiten des Getriebes, also die Hauptgetriebeeinheit und/oder die Reversiereinheit und/oder das Zwischengetriebe, austauschbar sein können.

In Ausgestaltung der Erfindung umfasst das Getriebe, insbesondere die Hauptgetriebeeinheit und/oder die Reversiereinheit und/oder das Zwischengetriebe, ein zweites Abtriebselement, insbesondere eine zweite Ausgangswelle. Das zweite Abtriebselement kann zum Antrieb der vorderen Bodeneingriffsmittel des Nutzfahrzeugs vorgesehen sein und/oder mit einem Vorderachsmodul antreibbar verbindbar oder verbunden sein. Es kann ein Kraft- und/oder Drehmomentfluss zwischen dem zweiten Abtriebselement und der vorderen Antriebsachse herstellbar sein, sodass beispielsweise eine Kraft und/oder ein Drehmoment an die vordere Antriebsachse des Nutzfahrzeugs übertragen werden kann, und insbesondere kann gleichzeitig ein Kraft- und/oder Drehmomentfluss zwischen dem ersten Antriebselement und der hinteren Antriebsachse herstellbar sein. Vorteilhafterweise kann so ein Kraft- und/oder Drehmomentfluss, insbesondere ein getrennter Kraft- und/oder Drehmomentfluss, vom ersten Abtriebselement zur hinteren Antriebsachse und vom zweiten Abtriebselement zur vorderen Antriebsachse herstellbar sein.

In Ausgestaltung der Erfindung umfasst das Getriebe ein die Hauptgetriebeeinheit aufnehmendes Hauptgetriebegehäuse und/oder ein die Reversiereinheit aufnehmendes Reversiereinheitsgehäuse und/oder ein das Zwischengetriebe aufnehmendes Zwischengetriebegehäuse und/oder ein ein Hinterachsmodul aufnehmendes Hinterachsgehäuse. Das Getriebe kann also ein Hauptgetriebegehäuse, welches die Hauptgetriebeeinheit aufnehmen kann, und/oder ein Hinterachsgehäuse, welches das Hinterachsmodul aufnehmen kann und/oder ein Reversiereinheitsgehäuse, welches die Reversiereinheit aufnehmen kann, und/oder ein Zwischengetriebegehäuse umfassen, welches das Zwischengetriebe aufnehmen kann. Das Hauptgetriebegehäuse kann eine Gehäuseabdeckung aufweisen. Das Reversiereinheitsgehäuse kann einen ersten Deckel und/oder das Zwischengetriebegehäuse einen zweiten Deckel und/oder das Hinterachsgehäuse einen dritten Deckel aufweisen. Das Hauptgetriebegehäuse und/oder das Reversiereinheitsgehäuse und/oder das Zwischengetriebegehäuse und/oder das Hinterachsgehäuse können vorteilhafterweise, unabhängig von der Anzahl der Planetenradsätze und/oder Wellen, einen vorgebbaren und/oder festen Bauraum, also eine vorgebbare axiale und laterale Ausdehnung, aufweisen. Insbesondere in einem im Nutzfahrzeug verbauten Zustand weisen die Gehäuse dadurch im Nutzfahrzeug stets den gleichen Bauraum und/oder somit eine Modularität bzgl. des Bauraums auf. Das Hauptgetriebegehäuse und/oder das Reversiereinheitsgehäuse und/oder das Zwischengetriebegehäuse und/oder das Hinterachsgehäuse können ein- oder mehrteilig ausgebildet sein. Unter einem einteilig ausgebildeten Hauptgetriebegehäuse und/oder einem einteilig ausgebildeten Reversiereinheitsgehäuse und/oder einem einteilig ausgebildeten Zwischengetriebegehäuse und/oder einem einteilig ausgebildeten Hinterachsgehäuse kann insbesondere verstanden werden, dass der jeweils die Hauptgetriebeeinheit oder die Reversiereinheit oder das Zwischengetriebe oder das Hinterachsmodul umgebende Gehäuseabschnitt, bis auf die Gehäuseabdeckung oder den ersten oder zweiten oder dritten Deckel, aus einem Teil gefertigt ist, beispielsweise aus einem Guss hergestellt werden kann. Die Gehäuse können in diesem Fall eine Öffnung aufweisen, welche mit der Gehäuseabdeckung bzw. dem ersten oder zweiten oder dritten Deckel verschließbar ist. Hierbei soll - obwohl das Hauptgetriebegehäuse insgesamt dann durch den die Hauptgetriebeeinheit umgebenden Gehäuseabschnitt und die Gehäuseabdeckung gebildet ist - dennoch als ein einteilig ausgebildetes Hauptgetriebegehäuse aufgefasst werden. Gleiches gilt auch für das Reversiereinheitsgehäuse und/oder das Zwischengetriebegehäuse und/oder das Hinterachsgehäuse. Die Gehäuseabdeckung und/oder der erste, zweite und dritte Deckel können das jeweilige Gehäuse nach außen abschliessen, ohne jedoch Bauteile des Getriebes in sich aufzunehmen. Das Hauptgetriebegehäuse und/oder das Reversiereinheitsgehäuse und/oder das Zwischengetriebegehäuse und/oder das Hinterachsgehäuse können Bauteile des Getriebes in sich aufnehmen. Durch eine Öffnung des Hauptgetriebegehäuses und/oder eine Öffnung des Reversiereinheitsgehäuse und/oder eine Öffnung des Zwischengetriebegehäuse und/oder eine Öffnung des Hinterachsgehäuse können die Komponenten oder Bauteile der Hauptgetriebeeinheit und/oder der Reversiereinheit und/oder des Zwischengetriebes und/oder des Hinterachsmoduls montiert und/oder gewartet bzw. repariert werden. Alternativ zu einem einteilig ausgebildeten Hauptgetriebegehäuse und/oder Reversiereinheitsgehäuse und/oder Zwischengetriebegehäuse und/oder Hinterachsgehäuse können dieses auch zwei oder mehrteilig ausgebildet sein. So könnte das Hauptgetriebegehäuse und/oder das Reversiereinheitsgehäuse und/oder das Zwischengetriebegehäuse und/oder das Hinterachsgehäuse beispielsweise aus zwei im Wesentlichen gleich großen Teilen zusammengesetzt sein. Das Hinterachsmodul, insbesondere das Hinterachsgehäuse, kann bevorzugt direkt oder unmittelbar, an der Zwischengetriebe, insbesondere dem Zwischengetriebegehäuse, angeordnet sein. Ebenso kann das Zwischengetriebe, insbesondere das Zwischengetriebegehäuse, bevorzugt direkt oder unmittelbar, an der Reversiereinheit, insbesondere dem Reversiereinheitsgehäuse angeordnet sein. Darüber hinaus kann die Reversiereinheit, insbesondere das Reversiereinheitsgehäuse, bevorzugt direkt oder unmittelbar, an der Hauptgetriebeeinheit, insbesondere dem Hauptgetriebegehäuse, angeordnet sein. Insgesamt wird durch diese Massnahmen von Vorteil eine einfache Herstellung bzw. Montage des Getriebes ermöglicht. Wenn die Gehäuseteile aneinander montiert werden, ist das Getriebe zumindest größtenteils montiert und grundsätzlich funktionsbereit. In einem im Nutzfahrzeug eingebauten Zustand kann ein Koppelelement oder eine Welle-Nabe-Verbindung eine Kurbelwelle oder eine Welle des Antriebsmotors zum Antrieb des Getriebes mit dem Antriebselement verbinden, insbesondere drehfest und/oder antreibbar verbinden. Dadurch kann vorteilhafterweise zwischen dem Antriebsmotor und dem Getriebe, insbesondere der Hauptgetriebeeinheit und/oder der Reversiereinheit und/oder der Zwischengetriebe ein Drehmomentfluss herstellbar sein, insbesondere unmittelbar herstellbar sein.

In Ausgestaltung der Erfindung umfasst das Hinterachsmodul mindestens teilweise oder ganz die hintere Antriebsachse und/oder ein Hinterachsdifferential. Das Getriebe kann ein Hinterachsmodul aufweisen. Das Hinterachsmodul, insbesondere das Hinterachsdifferential, kann ein Hinterachsritzel, beispielsweise ein Antriebskegelrad oder ein Kegelritzel, und ein Hinterachszahnrad, beispielsweise ein Kegel- oder Ringzahnrad, umfassen. Das Hinterachsgehäuse kann das Hinterachsmodul, insbesondere das Hinterachsdifferential und/oder zumindest teilweise die hintere Antriebsachse aufnehmen. Das erste Abtriebselement kann mit dem Hinterachsritzel verbunden sein oder das Hinterachsritzel und das erste Abtriebselement können als ein einteiliges Bauteil ausgebildet sein. Das Getriebe kann das Vorderachsmodul aufweisen. Das Vorderachsmodul kann teilweise oder ganz die vordere Antriebsachse und/oder ein Vorderachsdifferential umfassen. Das Vorderachsmodul, insbesondere das Vorderachsdifferential, kann ein Vorderachsritzel, beispielsweise ein Antriebskegelrad oder ein Kegelritzel, und ein Vorderachszahnrad, beispielsweise ein Kegel- oder Ringzahnrad, umfassen. Ein Vorderachsgehäuse kann das Vorderachsmodul, insbesondere das Vorderachsdifferential und/oder zumindest teilweise die vordere Antriebsachse aufnehmen. Das zweite Abtriebselement kann mit dem Vorderachsritzel verbunden sein oder das Vorderachsritzel und das zweite Abtriebselement können als ein einteiliges Bauteil ausgebildet sein. Vorteilhafterweise ist dadurch ein modularer und/oder kompakter Aufbau des Getriebes umsetzbar.

In einer vorteilhaften Weiterbildung des Getriebes umfasst das Getriebe ein Zapfwellenmodul. Das Hinterachsmodul, insbesondere das Hinterachsgehäuse, kann zwischen dem Zapfwellenmodul und der Hauptgetriebeeinheit angeordnet sein. Das Getriebe kann eine Zapfwellen-Antriebswelle umfassen. Das Zapfwellenmodul kann von der Zapfwellen-Antriebswelle antreibbar sein. Dabei kann die Getriebelängsachse koaxial oder parallel zur Zapfwellen-Antriebswelle sein. Die Zapfwellen-Antriebswelle kann insbesondere im Antriebselement angeordnet sein. Ein Zapfwellengehäuse kann die Bauteile des Zapfwellenmoduls aufnehmen. Die Bauteile des Zapfwellenmoduls können die Zapfwellen-Antriebswelle und/oder der Zapfenwellenstummel sowie das Zapfwellen-Getriebe sein. Die Zapfwellen-Antriebswelle kann als Vollwelle ausgeführt sein. Das Antriebselement kann als Hohlwelle ausgeführt sein. Das Antriebselement kann die Zapfwellen-Antriebswelle in sich aufnehmen, die Zapfwellen-Antriebswelle kann also im Antriebselement angeordnet sein. Die Zapfwellen-Antriebswelle kann in einem Zustand, bei welchem das Getriebe im Nutzfahrzeug eingebaut ist, vom Antriebsmotor antreibbar sein, insbesondere auch derart gekoppelt sein, dass die Zapfwellen-Antriebswelle mit dem Antriebsmotor antreibbar ist. Das Zapfwellenmodul, insbesondere das Zapfwellengetriebe, kann also durch die Zapfwellen-Antriebswelle mit dem Antriebsmotor durch das Antriebselement, insbesondere auch durch das Hinterachsmodul, antriebsverbunden oder antreibbar sein. Auf diese Weise ist vorteilhafterweise eine direkte und damit besonders energieeffiziente Antriebsleistungsübertragung vom Antriebsmotor zu einem Zapfwellenmodul, insbesondere Zapfwellenabtrieb des Nutzfahrzeugs möglich.

Die Erfindung betrifft weiter ein landwirtschaftliches oder industrielles Nutzfahrzeug, insbesondere ein Traktor oder Schlepper oder eine Baumaschine. Das landwirtschaftliche oder industrielle Nutzfahrzeug umfasst ein Getriebe nach einem der Ansprüche 1 bis 9. Das Nutzfahrzeug kann ausserdem einen Antriebsmotor umfassen. Das erfindungsgemässe Nutzfahrzeug weist die oben beschriebenen Vorteile des erfindungsgemässen Getriebes auf.

In Ausgestaltung der Erfindung ist das Getriebe derart im Nutzfahrzeug angeordnet, dass die Getriebelängsachse im Wesentlichen parallel oder koaxial, insbesondere parallel oder koaxial, zu einer Fahrzeuglängsachse ist. Dabei kann die Hauptgetriebeeinheit, und/oder insbesondere die Reversiereinheit und/oder das Zwischengetriebe, entlang der Getriebelängsachse ausgerichtet sein. Das Getriebe kann aber auch derart im Nutzfahrzeug angeordnet sein, dass eine Getriebemittelebene im Wesentlichen parallel oder kongruent zur Fahrzeugmittelebene ist, insbesondere dass die Getriebemittelebene parallel oder kongruent zur Fahrzeugmittelebene ist. Im Nutzfahrzeug mit Antriebsmotor und Getriebe kann mit dem Getriebe ein vom Antriebsmotor erzeugtes Drehmoment auf mindestens eine vordere und/oder hintere Antriebsachse des Nutzfahrzeugs übertragbar sein. Das landwirtschaftliche oder industrielle Nutzfahrzeug kann eine Kabine und ein Fahrgestell umfassen, wobei die Kabine am, insbesondere auf, dem Fahrgestell angeordnet sein kann. Die Achslage des Antriebselements des Getriebes kann durch die Position der Kurbelwelle des Antriebsmotors bestimmt sein. Das erste Abtriebselement kann längsorientiert und in derselben vertikalen Position wie die hintere Antriebsachse sein, deren Achse mit den Hinterrädern koaxial sein kann. Ebenso kann das zweite Abtriebselement längsorientiert und/oder in derselben vertikalen Position wie die vordere Antriebsachse sein. Die vordere und hintere Antriebsachse können mit dem ersten Abtriebselement antreibbar sein. Es können aber auch die hintere Antriebsachse mit dem ersten Abtriebselement und die vordere Antriebsachse mit dem zweiten Abtriebselement antreibbar sein. Das erfindungsgemässe Nutzfahrzeug weist vorteilhafterweise eine deutlich schlankere und/oder kompakter Bauweise auf und/oder das Getriebe kommt mit weniger Bauraum aus.

Mit dem erfindungsgemässen Getriebe und dem erfindungsgemässen Nutzfahrzeug, das das Getriebe umfasst, können vorteilhafterweise mindestens 12 Vorwärtsgänge und insbesondere mindestens 12 Rückwärtsgänge zwischen dem Antriebselement und dem ersten Abtriebselement und/oder zweiten Abtriebselement herstellbar und/oder realisierbar sein. Das erfindungsgemässe Getriebe und/oder das erfindungsgemässe Nutzfahrzeug weisen mindestens einen und/oder mehrere der folgenden Vorteile auf:
- Höhere Effizienz und weniger Verlustleistung des Getriebes
- Das Getriebe benötigt weniger Verpackungsvolumen, also einen kleineren Bauraum als bekannte vergleichbare Getriebe.
- Mehr Optionen für das Übersetzungsverhältnis des Getriebes aufgrund der Kombination mehrerer Planetenstufen
- Geringerer Geräuschpegel
- Weniger Kupplungen
- Kompakter Bauraum und insbesondere eine Verringerung des Volumens des Getriebes und/oder des benötigten Bauraums im Nutzfahrzeug
- Koaxiale Anordnung von Antriebs- und erstem und/oder zweitem Abtriebselement
- Das Getriebe weist ein geringeres Gewicht und geringere Herstellkosten als bekannte vergleichbare Getriebe auf
- Höhere Leistungsdichte und höhere Drehmomentkapazität
- Längere Lebensdauer des Getriebes aufgrund der Verwendung von Planetenradsätzen gegenüber bekannten vergleichbaren Getrieben
- Niedriges Trägheitsmoment

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1: eine schematische Darstellung eines ersten Ausführungsbeispiels eines erfindungsgemässen landwirtschaftlichen oder industriellen Nutzfahrzeugs mit einem erfindungsgemässen Getriebe, und
- Fig. 2: eine schematische Darstellung eines ersten Ausführungsbeispiels des erfindungsgemässen Getriebes, und
- Fig. 3: eine schematische Darstellung eines zweiten Ausführungsbeispiels des erfindungsgemässen Getriebes, und
- Fig. 4: eine schematische Darstellung eines dritten Ausführungsbeispiels des erfindungsgemässen Getriebes, und
- Fig. 5: eine schematische Darstellung eines vierten Ausführungsbeispiels des erfindungsgemässen Getriebes, und
- Fig. 6: eine schematische Darstellung eines Schaltschemas des erfindungsgemässen Getriebes, und
- Fig. 7: eine schematische Darstellung eines zweiten Ausführungsbeispiels eines erfindungsgemässen landwirtschaftlichen oder industriellen Nutzfahrzeugs mit einem erfindungsgemässen Getriebe.

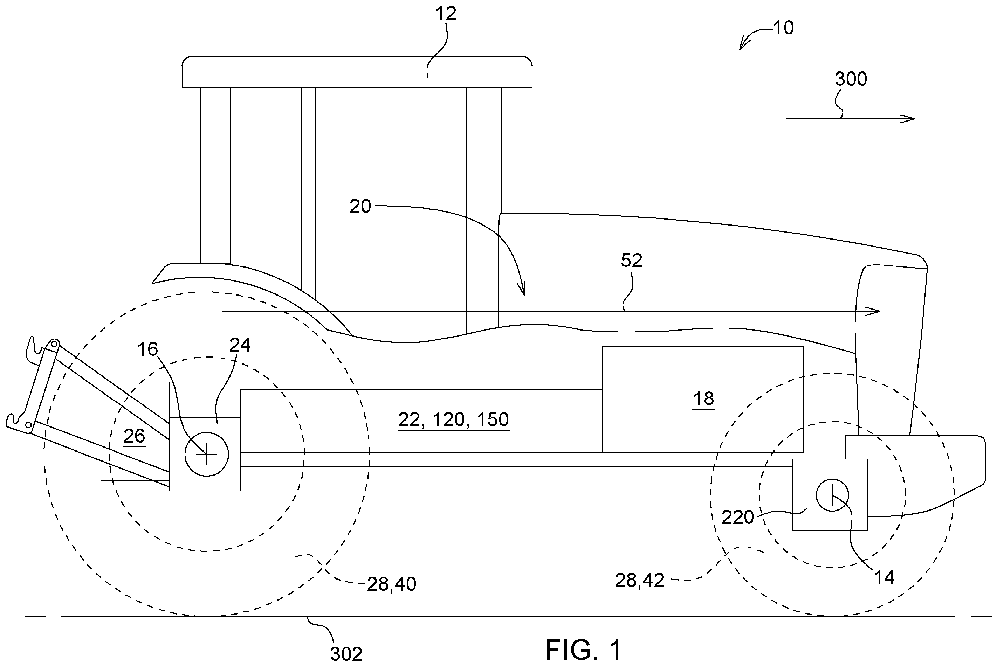

Figur 1 zeigt eine schematische Darstellung eines ersten Ausführungsbeispiels eines erfindungsgemässen landwirtschaftlichen oder industriellen Nutzfahrzeugs 10, insbesondere eines Traktors oder Schleppers, mit einem erfindungsgemässen Getriebe 20. Das Nutzfahrzeug 10 umfasst eine Kabine 12, eine vordere Antriebsachse 14 und eine hintere Antriebsachse 16. Die hintere Antriebsachse 16 kann permanent angetrieben werden und die vordere Antriebsachse 14 kann bedarfsweise zuschaltbar sein oder permanent angetrieben werden. Das Nutzfahrzeug 10 umfasst ferner einen Antriebsmotor 18, der als Verbrennungskraftmaschine ausgeführt sein kann. Das Getriebe 20 weist eine Antriebsstrangarchitektur auf, die, wie nachfolgend beschrieben, aus verschiedenen einzelnen Getriebemodulen zusammengesetzt sein kann. Die vorliegend beschriebene Antriebsstrangarchitektur kann im Kraft- und Drehmomentfluss, ausgehend vom Antriebsmotor 18, ein erfindungsgemässes Getriebe 20 mit einer Hauptgetriebeeinheit 22 und/oder einem Zwischengetriebe 150 und/oder einer Reversiereinheit 120 und/oder insbesondere einem Hinterachsmodul 24 und/oder einem Vorderachsmodul 220 und/oder einem Zapfwellenmodul 26 aufweisen.

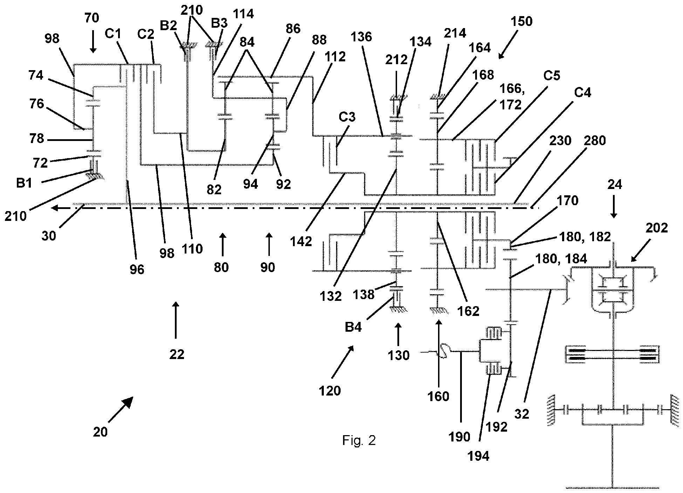

Dabei ist das Getriebe 20, insbesondere die Hauptgetriebeeinheit 22, dem Antriebsmotor 18 entgegen der Vorwärtsfahrrichtung 300 des Nutzfahrzeugs nachgelagert und/oder entlang einer Fahrzeuglängsachse 52, also einer Längsachse 52 des Nutzfahrzeugs 10, angeordnet ist. Das Getriebe 20, insbesondere die Hauptgetriebeeinheit 22, ist mit dem Antriebsmotor 18 antriebsverbunden und/oder kann mit dem Antriebsmotor 18 antreibbar sein. Das Hinterachsmodul 24 kann dem Getriebe 20, insbesondere der Hauptgetriebeeinheit 22 oder der Reversiereinheit 120 oder dem Zwischengetriebe 150, nachgelagert sein. Dabei kann das Hinterachsmodul 24 mit der Hauptgetriebeeinheit 22 oder der Reversiereinheit 120 oder dem Zwischengetriebe 150 antriebsverbunden und/oder antreibbar sein. Mit dem gezeigten Getriebe 20 kann ein Kraft- und Drehmoment des Antriebsmotors 18 mit unterschiedlichen Gangstufen auf ein erstes Abtriebselement (siehe Figuren 2, Bezugszeichen 32) und/oder ein zweites Abtriebselement (siehe Figur 2, Bezugszeichen 190) übertragen werden.

Das erste Abtriebselement 32 kann in Antriebsverbindung mit der hinteren und der vorderen Antriebsachse 14, 16 stehen. Ebenso kann aber auch das erste Abtriebselement in Antriebsverbindung mit der hinteren Antriebsachse 16 und das zweite Abtriebselement 190 in Antriebsverbindung mit der vorderen Antriebsachse 14 stehen. Es können also die vordere und/oder hintere Antriebsachse 14, 16 mit dem ersten Abtriebselement 32 antreibbar sein, insbesondere kann ein Kraft- und Drehmoment vom ersten Abtriebselement 32 auf die vordere und/oder hintere Antriebsachse 14, 16 übertragen werden. Es kann aber auch die hintere Antriebsachse 16 mit dem ersten Abtriebselement 32 und/oder die vorderen Antriebsachse 14 mit dem zweiten Abtriebselement 190 antreibbar sein, insbesondere kann ein Kraft- und Drehmoment vom ersten Abtriebselement 32 auf die hintere Antriebsachse 16 übertragen werden und/oder ein Kraft- und Drehmoment vom zweiten Abtriebselement 190 auf die vordere Antriebsachse 14 übertragen werden. Die vordere und/oder hintere Antriebsachse 14, 16 können eine Drehung des ersten Abtriebselements 32 in eine Drehung eines oder mehrerer Bodeneingriffsmittel 28 und somit in einen Vorschub des Nutzfahrzeugs umwandeln. Ebenso kann aber auch die vordere Antriebsachse 14 eine Drehung des ersten Abtriebselements 32 und die hintere Antriebsachse 16 eine Drehung des zweiten Abtriebselements 190 in eine Drehung eines oder mehrerer Bodeneingriffsmittel 28 und somit in einen Vorschub des Nutzfahrzeugs umwandeln. Das Nutzfahrzeug 10 kann daher abhängig von einer im Getriebe 20 gewählten Gangstufe mit unterschiedlicher Drehzahl angetrieben werden. Folglich ist ein mit dem Getriebe 20 ausgestattetes Nutzfahrzeug 10 abhängig von der im Getriebe 20 gewählten Gangstufe in unterschiedlichen Geschwindigkeitsbereichen bewegbar.

Das Zugfahrzeug 10 kann eines oder mehrere Bodeneingriffsmittel 28, hier in Form von Rädern 40, 42 dargestellt, aufweisen, welche mit einem Untergrund 302 zur Obertragung von Antriebskräften in Eingriff stehen und/oder durch die sich das Zugfahrzeug 10 auf dem Untergrund abstützt. Das Zugfahrzeug 10 kann ausserdem ein Fahrgestell (nicht dargestellt) aufweisen, wobei das Fahrgestell insbesondere von den an der vorderen und hinteren Antriebsachse 14, 16 aufgehängten Rädern 28 getragen werden kann.

Figur 2 zeigt eine schematische Darstellung eines ersten Ausführungsbeispiels des erfindungsgemässen Getriebes 20. Das in Figur 2 gezeigte Getriebe 20 entspricht im Wesentlichen dem in Figur 1 gezeigten Getriebe, weshalb im Folgenden lediglich auf in Figur 1 nicht gezeigten Details eingegangen wird. Das Nutzfahrzeug 10 kann das Getriebe 20, wie in Figur 2 dargestellt, umfassen. Das Getriebe 20 zum Übertragen eines von einem Antriebsmotor 18 erzeugten Drehmoments auf mindestens eine vordere und/oder hintere Antriebsachse 14, 16 des landwirtschaftlichen oder industriellen Nutzfahrzeugs 10 umfasst ein Antriebselement 30 und ein erstes Abtriebselement 32 und eine Hauptgetriebeeinheit 22 und ein Zwischengetriebe 120 und eine Reversiereinheit 150. Die Hauptgetriebeeinheit 22 weist mindestens drei Planetenradsätze 70, 80, 90 auf. Das Zwischengetriebe (150) weist mindestens einen Planetenradsatz 160 auf und die Reversiereinheit 120 weist mindestens einen Planetenradsatz auf. Die Hauptgetriebeeinheit 22 umfasst ausserdem mindestens fünf Schaltelement B1, B2, B3, C1, C2 und das Zwischengetriebe 150 mindestens zwei Schaltelementen C4, C5 und die Reversiereinheit 120 mindestens zwei Schaltelementen B4, C3. Mindestens zwei Schaltelemente B1, B2, B3, C1, C2 der Hauptgetriebeeinheit 22 und mindestens ein Schaltelement C4, C5 des Zwischengetriebes 150 und mindestens ein Schaltelement B4, C3 der Reversiereinheit 120 in Kombinationen von mindestens vier Schaltelementen B1, B2, B3, B4, C1, C2, C3, C4, C5 betätigbar sind, um mindestens zwölf Vorwärtsgänge zwischen dem Antriebselement 30 und dem ersten Abtriebselement 32 herzustellen.

Die Hauptgetriebeeinheit 22 umfasst einen ersten, zweiten und dritten Planetenradsatz 70, 80, 90. Der erste Planetenradsatz 70 weist ein erstes Sonnenrad 72, ein erstes Hohlrad 74, einen ersten Planetenträger 76 und einen ersten Planetensatz 78 auf. Der zweite Planetenradsatz 80 weist ein zweites Sonnenrad 82 auf. Der dritte Planetenradsatz 90 weist ein drittes Sonnenrad 92 und einen dritten Planentensatz 94 auf. Darüber hinaus weisen der zweite und dritte Planetenradsatz 80, 90 einen ersten gemeinsamen Planetensatz 84 und ein erstes gemeinsames Hohlrad 86 und einen ersten gemeinsamen Planetenträger 88 auf.

Das Antriebselement 30 ist mit dem ersten Hohlrad 74 und/oder der ersten Kupplung C1 verbunden oder verbindbar, bevorzugt drehfest und/oder antreibbar verbunden oder verbindbar. Die Hauptgetriebeeinheit 22 kann ein erstes Verbindungselement 96 umfassen. Das erste Verbindungselement 96 kann mit dem Antriebselement 30 und dem ersten Hohlrad 74 und/oder der ersten Kupplung C1 verbunden oder verbindbar sein, bevorzugt drehfest und/oder antreibbar verbunden oder verbindbar sein. Der erste Planetenträger 76 ist mit dem dritten Sonnenrad 92 und/oder der ersten Kupplung C1 und/oder der zweiten Kupplung C2 verbunden oder verbindbar, bevorzugt drehfest und/oder antreibbar verbunden oder verbindbar. Ebenso kann die Hauptgetriebeeinheit 22 ein zweites Verbindungselement 98 umfassen. Das zweite Verbindungselement 98 kann mit dem ersten Planetenträger 76 und dem dritten Sonnenrad 92 und/oder der ersten Kupplung C1 und/oder der zweiten Kupplung C2 verbunden oder verbindbar sein, bevorzugt drehfest und/oder antreibbar verbunden oder verbindbar sein. Im Speziellen kann das Getriebe 20, insbesondere die Hauptgetriebeeinheit 22 ein erstes Zwischenelement 112 umfassen. Das erste Zwischenelement 112 kann mit dem ersten gemeinsamen Hohlrad 86 verbunden sein, bevorzugt drehfest und/oder antreibbar verbunden sein. Darüber hinaus ist das zweite Sonnenrad 82 mit der zweiten Bremse B2 und/oder der zweiten Kupplung C2 verbunden oder verbindbar, insbesondere drehfest und/oder antreibbar verbunden oder verbindbar. Das Getriebe 20, insbesondere die Hauptgetriebeeinheit 22, kann ein drittes Verbindungselement 110, insbesondere eine dritte Verbindungswelle umfassen. Das dritte Verbindungselement 110 kann mit dem zweiten Sonnenrad 82 und/oder der zweiten Bremse B2 und/oder der zweiten Kupplung C2 verbunden oder verbindbar sein, bevorzugt drehfest und/oder antreibbar verbunden oder verbindbar sein. Ebenso ist der erste gemeinsame Planetenträger 88 mit der dritten Bremse B3 verbunden oder verbindbar sein, insbesondere drehfest und/oder antreibbar verbunden oder verbindbar sein. Das Getriebe 20, insbesondere die Hauptgetriebeeinheit 22, kann ein viertes Verbindungselement 114, insbesondere eine vierte Verbindungswelle umfassen. Das vierte Verbindungselement 114 kann mit der dritten Bremse B3 und/oder dem ersten gemeinsamen Planetenträger 88 verbunden oder verbindbar sein, bevorzugt drehfest und/oder antreibbar verbunden oder verbindbar sein. Das erste Sonnenrad 72 ist mit der ersten Bremse B1 lösbar gegen Drehung haltbar. Das erste Sonnenrad 72 ist mit der ersten Bremse B1 an ein Hauptgetriebegehäuse 210 koppelbar und/oder lösbar mit dem Hauptgetriebegehäuse 210 verbindbar. Das Antriebselement 30 ist mit dem ersten Hohlrad 74 verbunden. Das Antriebselement 30, und insbesondere das erste Verbindungselement 96, ist mit der ersten oder über die erste Kupplung C1 mit dem ersten Planetenträger 76 und/oder dem dritten Sonnenrad 82 und/oder der zweiten Kupplung C2 und/oder insbesondere dem zweiten Verbindungselement 98 lösbar verbindbar, insbesondere lösbar drehfest und/oder antreibbar verbindbar. Der erste Planetenträger 76, und insbesondere das zweite Verbindungselement 98, ist mit der zweiten oder über die zweite Kupplung C2 mit dem zweiten Sonnenrad 82 und/oder der zweiten Bremse B2 und/oder insbesondere dem dritten Verbindungselement 110 lösbar verbindbar, insbesondere lösbar drehfest und/oder antreibbar verbindbar. Das zweite Sonnenrad 82, und insbesondere das dritte Verbindungselement 110, ist mit der zweiten Bremse B2 lösbar gegen Drehung haltbar. Das zweite Sonnenrad 82 ist mit der zweiten Bremse B2 an das Hauptgetriebegehäuse 210 koppelbar und/oder mit dem Hauptgetriebegehäuse 210 lösbar verbindbar. Der erste gemeinsame Planetenträger 88 und/oder der erste gemeinsame Planetensatz 84 und/oder der dritte Planetensatz 94, und insbesondere das vierte Verbindungselement 114, sind mit der dritten Bremse B3 lösbar gegen Drehung haltbar. Der erste gemeinsame Planetenträger 88 und/oder der erste gemeinsame Planetensatz 84 und/oder der dritte Planetensatz 94, und insbesondere das vierte Verbindungselement 110, können mit der dritten Bremse B3 an das Hauptgetriebegehäuse 210 koppelbar und/oder mit dem Hauptgetriebegehäuse 210 lösbar verbindbar sein. Dadurch kann vorteilhafterweise eine optimale kompakte Packungsdichte des Getriebes 20, insbesondere der Hauptgetriebeeinheit 22, erreicht werden, insbesondere auch eine kompakte räumliche Anordnung des Getriebes 20 im Nutzfahrzeug in einem im Nutzfahrzeug 10 verbauten Zustand.

Das Getriebe 20 umfasst weiter eine Reversiereinheit 120. Die Reversiereinheit 120 umfasst einen vierten Planetenradsatz 130 mit einem vierten Sonnenrad 132, einem vierten Hohlrad 134, einem vierten Planetenträger 136 und einem vierten Planetensatz 138. Die Reversiereinheit 120 umfasst zwei Schaltelemente B4, C3, die betätigbar sind, bevorzugt selektiv betätigbar sind, besonders bevorzugt schliessbar und lösbar und/oder einrückbar und/oder schaltbar und/oder selektiv eingreifbar sind, sodass das erste gemeinsame Hohlrad 86, und insbesondere das erste Zwischenelement 112, mit dem vierten Sonnenrad 132 verbindbar ist oder das vierte Hohlrad 134 gegen Drehung haltbar ist. Die Schaltelemente der Reversiereinheit 120 sind eine dritte Kupplung C3 und eine vierte Bremse B4. Das erste gemeinsame Hohlrad 86, und insbesondere das erste Zwischenelement 112, ist mit dem vierten Planetenträger 136 und/oder der dritten Kupplung C3 verbunden oder verbindbar, bevorzugt drehfest und/oder antreibbar verbunden oder verbindbar. Das vierte Sonnenrad 132 kann mit einem fünften Sonnenrad 162 und/oder der dritten Kupplung C3 und/oder einer vierten Kupplung C4 verbunden oder verbindbar sein, bevorzugt drehfest und/oder antreibbar verbunden oder verbindbar sein. Die Reversiereinheit 120 kann ein sechstes Verbindungselement 142, insbesondere eine sechste Verbindungswelle umfassen. Das sechste Verbindungselement 142 kann mit dem vierten Sonnenrad 132 und einem fünften Sonnenrad 162 und/oder der dritten Kupplung C3 und/oder einer vierten Kupplung C4 verbunden oder verbindbar sein, bevorzugt drehfest und/oder antreibbar verbunden oder verbindbar sein. Der vierte Planetenträger 136 und das erste gemeinsame Hohlrad 86, und insbesondere das erste Zwischenelement 112, sind mit der vierten oder über die dritte Kupplung C3 mit dem vierten Sonnenrad 132 und/oder insbesondere dem sechsten Verbindungselement 142 lösbar verbindbar, insbesondere lösbar drehfest verbindbar. Das vierte Hohlrad 134 ist mit der vierten Bremse B4 lösbar gegen Drehung haltbar. Das vierte Hohlrad 134 kann mit der vierten Bremse B4 an das Reversiereinheitsgehäuse 212 koppelbar und/oder mit diesem lösbar verbindbar sein.

Im Weiteren umfasst das Getriebe 20 ein Zwischengetriebe 150. Das Zwischengetriebe 150 weist einen fünften Planetenradsatz 160 mit einem fünften Sonnenrad 162, einem fünften Hohlrad 164, einem fünften Planetenträger 166 und einem fünften Planetensatz 168. Die zwei Schaltelemente C4, C5 des Zwischengetriebes 150 sind eine vierte Kupplung C4 und eine fünfte Kupplung C5. Die Schaltelemente C4, C5 des Zwischengetriebes 150 sind betätigbar, bevorzugt selektiv betätigbar sind, besonders bevorzugt schliessbar und lösbar und/oder einrückbar und/oder schaltbar und/oder selektiv eingreifbar sind, um das fünfte Sonnenrad 162 oder den fünften Planetenträger 166 und/oder den fünften Planetensatz 168 mit einem zweiten Zwischenelement 170 und/oder dem ersten Abtriebselement 32 zu verbinden. Das fünfte Sonnenrad 162 ist mit dem vierten Sonnenrad 132 und/oder der dritten Kupplung C3 und/oder einer vierten Kupplung C4 verbunden oder verbindbar, bevorzugt drehfest und/oder antreibbar verbunden oder verbindbar. Das sechste Verbindungselement 142 kann dem vierten und fünften Sonnenrad 132, 162 und/oder der dritten Kupplung C3 und/oder einer vierten Kupplung C4 verbunden oder verbindbar sein, bevorzugt drehfest und/oder antreibbar verbunden oder verbindbar sein. Im Speziellen können die Reversiereinheit 120 und/oder das Zwischengetriebe 150 das sechste Verbindungselement 142 zumindest teilweise umfassen. Ausserdem ist der fünfte Planetenträger 166 mit der fünften Kupplung C5 verbunden oder verbindbar, insbesondere drehfest und/oder antreibbar verbunden oder verbindbar. Das Getriebe 20, insbesondere das Zwischengetriebe 150, kann ein siebtes Verbindungselement 172, insbesondere eine siebte Verbindungswelle umfassen. Das siebte Verbindungselement 172 kann mit der fünften Kupplung C5 und/oder dem fünften Planetenträger 166 verbunden oder verbindbar sein, bevorzugt drehfest und/oder antreibbar verbunden oder verbindbar sein. Das fünfte Sonnenrad 162 und das vierte Sonnenrad 132, und insbesondere das sechste Verbindungselement 142, sind mit der vierten oder über die vierte Kupplung C4 mit dem ersten Abtriebselement 32 und/oder dem zweiten Zwischenelement 170 lösbar verbindbar, insbesondere lösbar drehfest und/oder antreibbar verbindbar. Der fünfte Planetenträger 166, und insbesondere das siebte Verbindungselement 172, ist mit der fünften oder über die fünfte Kupplung C5 mit dem ersten Abtriebselement 32 und/oder dem zweiten Zwischenelement 170 lösbar verbindbar, insbesondere lösbar drehfest verbindbar. Das fünfte Hohlrad 164 ist gegen Drehung gehalten. Das fünfte Hohlrad 164 kann an das Zwischengetriebegehäuse 214 gekoppelt und/oder gegen Drehung gehalten sein. Das erste Abtriebselement 32 ist mit dem zweiten Zwischenelement 170 verbunden und/oder koppelbar und/oder antreibbar. Dazu können das zweite Zwischenelement 170 und das erste Abtriebselement 32 mit einem Zahnradsatz 180 gekoppelt und/oder das erste Abtriebselement 32 mit dem zweiten Zwischenelement 170 antreibbar sein. Der Zahnradsatz 180 umfasst zwei permanent kämmende Abtriebsräder, ein erstes und ein zweites Abtriebsrad 182, 184, die als Festräder ausgebildet sind. Das erste Abtriebsrad 182 ist drehfest mit dem zweiten Zwischenelement 170 und das zweite Abtriebsrad 184 drehfest mit dem ersten Abtriebselement 32 verbunden. Das zweite Abtriebselement 190 ist mit einer Abtriebskupplung 194 verbunden oder verbindbar, insbesondere lösbar drehfest und/oder antreibbar verbunden oder verbindbar. Die Abtriebskupplung 194 ist mit einem dritten Abtriebsrad 192 drehfest verbunden. Das dritte Abtriebsrad 192 kämmt permanent mit dem zweiten Abtriebsrad 184. Die Abtriebskupplung 194 kann schliessbar sein, sodass das zweite Abtriebselement 190 mit dem ersten Abtriebselement 32 antreibbar ist.

Das Getriebe 20 kann ausserdem ein die Hauptgetriebeeinheit 22 aufnehmendes Hauptgetriebegehäuse 210 und/oder ein die Reversiereinheit 120 aufnehmendes Reversiereinheitsgehäuse 212 und/oder ein das Zwischengetriebe 150 aufnehmendes Zwischengetriebegehäuse 214 und/oder ein Hinterachsmodul 24 aufnehmendes Hinterachsgehäuse 216 umfassen. Das Hauptgetriebegehäuse 210 kann zumindest teilweise oder vollständig das Antriebselement 30 und den ersten, zweiten und dritten Planetenradsatz 70, 80, 90 aufnehmen. Das Reversiereinheitsgehäuse 212 kann am, insbesondere unmittelbar am, Hauptgetriebegehäuse 210 angeordnet sein und/oder das Zwischengetriebegehäuse 214 kann am, insbesondere unmittelbar am, Reversiereinheitsgehäuse 212 angeordnet sein. Zwischen der Hauptgetriebeeinheit 22 kann über die Reversiereinheit 120 zur Zwischengetriebe 150 und dann zum Hinterachsmodul 24 ein Kraft- und/oder Drehmomentfluss herstellbar sein. Die Reversiereinheit 120 kann also der Hauptgetriebeeinheit 22 in Richtung des Kraft- und/oder Drehmomentfluss nachgeordnet sein. Ebenso kann das Zwischengetriebe 150 der Reversiereinheit 120 in Richtung des Kraft- und/oder Drehmomentfluss nachgeordnet sein. Ausserdem kann das Hinterachsmodul 24 dem Zwischengetriebe 150 in Richtung des Kraft- und/oder Drehmomentfluss nachgeordnet sein. Das Hauptgetriebegehäuse 210 kann auch zumindest teilweise oder vollständig das zweite Abtriebselement 190 aufnehmen. Das Hauptgetriebegehäuse 210 und/oder das Reversiereinheitsgehäuse 212 und/oder das Zwischengetriebegehäuse 214 können im Speziellen auch als ein Gehäuse, also einem Getriebegehäuse, mit einzelnen Abschnitten im Getriebegehäuse ausgebildet sein.

Das Hinterachsmodul 24 kann ein Hinterachsdifferential 202 und/oder die hintere Antriebsachse 16 umfassen. Ausserdem kann das Hinterachsmodul 24 insbesondere das Hinterachsdifferential 202, ein Hinterachsritzel und ein Hinterachszahnrad umfassen. Das Hinterachsdifferential 202 kann ein Hinterachsritzel, beispielsweise ein Antriebskegelrad oder ein Kegelritzel, sowie ein Hinterachszahnrad, beispielsweise ein Kegel- oder Ringzahnrad, umfassen. Zusätzlich kann das Getriebe 20 ein Vorderachsmodul 220 (siehe Figur 1) mit einem Vorderachsdifferential (nicht dargestellt) und/oder der vorderen Antriebsachse 14 umfassen. Das Vorderachsgehäuse (nicht dargestellt) kann das Vorderachsmodul 220, insbesondere das Vorderachsdifferenzial (nicht dargestellt) und/oder zumindest teilweise die vordere Antriebsachse 14 aufnehmen. Das Vorderachsdifferential (nicht dargestellt) kann ein Vorderachsritzel (nicht dargestellt), beispielsweise ein Antriebskegelrad oder ein Kegelritzel, sowie ein Vorderachszahnrad, beispielsweise ein Kegel- oder Ringzahnrad, umfassen. Das zweite Abtriebselement 190 kann mit dem Vorderachsritzel verbunden sein oder das Vorderachsritzel und das zweite Abtriebselement 190 können als ein einteiliges Bauteil ausgebildet sein.

Das Getriebe 20 kann auch das Zapfwellenmodul 26 umfassen und/oder das Hinterachsmodul 24 zwischen dem Zapfwellenmodul 26 und dem Zwischengetriebe 150 angeordnet sein. Ausserdem kann das Getriebe 20 eine Zapfwellen-Antriebswelle 230 umfassen. Die Zapfwellen-Antriebswelle 230 kann mit dem Antriebsmotor 20, insbesondere der Kurbelwelle, entweder direkt oder beispielsweise mit einem weiteren Koppelelement oder einer verzahnten oder geschraubten Verbindung oder mittels einer weiteren Antriebswelle (nicht dargestellt) verbunden sein. Dadurch kann die Zapfwellen-Antriebswelle 230 mit der Kurbelwelle antreibbar sein und eine Kraft und/oder ein Drehmoment von der Kurbelwelle auf die Zapfwellen-Antriebswelle 230 übertragbar sein. Die Zapfwellen-Antriebswelle 230 kann teilweise oder vollständig im Antriebselement 30 angeordnet sein. Die Zapfwellen-Antriebswelle 230 kann zumindest teilweise in der Hauptgetriebeeinheit 22, insbesondere dem Hauptgetriebegehäuse 210, und/oder der Reversiereinheit 120, insbesondere dem Reversiereinheitsgehäuse 212, und/oder der Zwischengetriebe 150, insbesondere dem Zwischengetriebegehäuse 214, und/oder dem Hinterachsmodul 24, insbesondere dem Hinterachsgehäuse 216, und/oder dem Zapfwellenmodul 26, insbesondere einem Zapfwellengehäuse angeordnet sein. Ebenso kann das Zapfwellenmodul 26 einen Zapfwellenstummel (nicht dargestellt) umfassen. Das Zapfwellengehäuse kann zumindest teilweise die Zapfwellen-Antriebswelle 230 und/oder zumindest teilweise den Zapfwellenstummel aufnehmen.

Somit sind mindestens, insbesondere genau, zwei Schaltelemente B1, B2, B3, C1, C2 der Hauptgetriebeeinheit 22 und mindestens, insbesondere genau, ein Schaltelement C4, C5 des Zwischengetriebes 150 und mindestens, insbesondere genau, ein Schaltelement B4, C3 der Reversiereinheit 120 in Kombinationen von mindestens vier, insbesondere genau vier Schaltelementen betätigbar, bevorzugt selektiv betätigbar, besonders bevorzugt schliessbar und lösbar und/oder einrückbar und/oder schaltbar und/oder selektiv eingreifbar, um mindestens, insbesondere genau, 12 (zwölf) Vorwärtsgänge, und insbesondere mindestens oder genau 12 (zwölf) Rückwärtsgänge, zwischen dem Antriebselement 30 und dem ersten Abtriebselement 32 und/oder dem zweiten Abtriebselement 190 herzustellen. Es kann aber auch nur ein Teil der 12 (zwölf) Rückwärtsgänge, also weniger als 12 (zwölf) Rückwärtsgänge, tatsächlich verwendet werden.

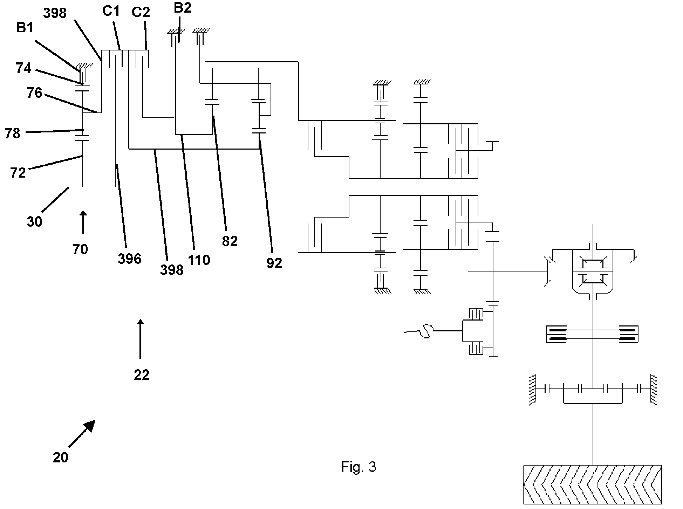

Figur 3 zeigt eine schematische Darstellung eines zweiten Ausführungsbeispiels des erfindungsgemässen Getriebes 20. Das in Figur 3 Getriebe 20 entspricht im Wesentlichen den in den Figuren 1 bis 2 gezeigten Getrieben 20, sodass im Folgenden lediglich auf Details und/oder Unterschiede eingegangen wird. Das Nutzfahrzeug 10 gemäss Figur 1 kann das Getriebe 20, wie in Figur 3 dargestellt, umfassen. Das Antriebselement 30 ist mit dem ersten Sonnenrad 72 verbunden, bevorzugt drehfest und/oder antreibbar verbunden. Das erste Sonnenrad 72 kann beispielsweise als Festrad auf dem Antriebselement 30 ausgebildet sein oder über eine Welle mit dem Antriebselement 30 verbunden sein. Das Getriebe 20, insbesondere die Hauptgetriebeeinheit 22, kann ein erstes Verbindungselement 396, insbesondere eine erste Verbindungswelle umfassen. Das erste Verbindungselement 396 kann mit dem Antriebselement 30 und/oder der ersten Kupplung C1 verbunden oder verbindbar sein, bevorzugt drehfest und/oder antreibbar verbunden oder verbindbar sein. Der erste Planetenträger 76 ist mit dem dritten Sonnenrad 92 und/oder der ersten Kupplung C1 und/oder der zweiten Kupplung C2 verbunden oder verbindbar, bevorzugt drehfest und/oder antreibbar verbunden oder verbindbar. Ein zweites Verbindungselement 398 kann mit dem ersten Planetenträger 76 und/oder dem dritten Sonnenrad 92 und/oder der ersten Kupplung C1 und/oder der zweiten Kupplung C2 verbunden oder verbindbar sein kann, bevorzugt drehfest und/oder antreibbar verbunden oder verbindbar sein. Das erste Hohlrad 74 ist mit der ersten Bremse B1 gegen Drehung haltbar, bevorzugt lösbar gegen Drehung haltbar. Das Antriebselement 30, und insbesondere das erste Verbindungselement 396, ist mit der ersten oder über die erste Kupplung C1 mit dem ersten Planetenträger 76 und/oder dem dritten Sonnenrad 92 und/oder der zweiten Kupplung C2 und/oder insbesondere dem zweiten Verbindungselement 398 lösbar verbindbar. Die erste Kupplung C1 kann also ausgebildet sein, das Antriebselement 30, insbesondere das erste Verbindungselement 396, mit dem ersten Planetenträger 76 und/oder dem dritten Sonnenrad 92 und/oder der zweiten Kupplung C2 und/oder insbesondere dem zweiten Verbindungselement 398 zu koppeln. Der erste Planetenträger 76 ist mit dem dritten Sonnenrad 92 verbunden, insbesondere mit dem oder über das zweite Verbindungselement 398. Der erste Planetenträger 76, und insbesondere das zweite Verbindungselement 398, kann mit der zweiten oder über die zweite Kupplung C2 mit dem zweiten Sonnenrad 82 und/oder der zweiten Bremse B2 und/oder insbesondere dem dritten Verbindungselement 110 lösbar verbindbar sein, insbesondere lösbar drehfest und/oder antreibbar verbindbar sein.

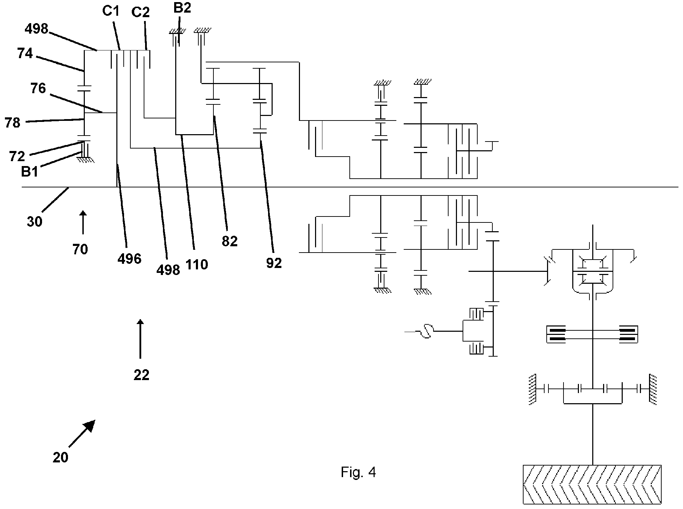

Figur 4 zeigt eine schematische Darstellung eines dritten Ausführungsbeispiels des erfindungsgemässen Getriebes 20. Das in Figur 4 gezeigte Getriebe 20 entspricht im Wesentlichen den in den Figuren 1 bis 3 gezeigten Getrieben 20, sodass im Folgenden lediglich auf Details und/oder Unterschiede eingegangen wird. Das Nutzfahrzeug 10 gemäss Figur 1 kann das Getriebe 20, wie in Figur 4 dargestellt, umfassen. Das Antriebselement 30 ist mit dem ersten Planetenträger 76 und/oder der ersten Kupplung C1 verbunden oder verbindbar, bevorzugt drehfest und/oder antreibbar verbunden oder verbindbar. Das Getriebe 20, insbesondere die Hauptgetriebeeinheit 22, kann ein erstes Verbindungselement 496, insbesondere eine erste Verbindungswelle umfassen. Das erste Verbindungselement 496 kann mit dem Antriebselement 30 und dem ersten Planetenträger 76 und/oder der ersten Kupplung C1 verbunden oder verbindbar sein, bevorzugt drehfest und/oder antreibbar verbunden oder verbindbar sein. Das erste Hohlrad 74 ist mit dem dritten Sonnenrad 92 und/oder der ersten Kupplung C1 und/oder der zweiten Kupplung C2 verbunden oder verbindbar, bevorzugt drehfest und/oder antreibbar verbunden oder verbindbar. Ebenso kann das Getriebe 20, insbesondere die Hauptgetriebeeinheit 22, ein zweites Verbindungselement 498, insbesondere eine zweite Verbindungswelle umfassen. Das zweite Verbindungselement 498 kann mit dem ersten Hohlrad 74 und/oder dem dritten Sonnenrad 92 und/oder der ersten Kupplung C1 und/oder der zweiten Kupplung C2 verbunden oder verbindbar sein, bevorzugt drehfest und/oder antreibbar verbunden oder verbindbar sein. Das erste Sonnenrad 72 ist mit der ersten Bremse B1 gegen Drehung haltbar, bevorzugt lösbar gegen Drehung haltbar. Das Antriebselement 30, und insbesondere das erste Verbindungselement 496, kann mit der ersten oder über die erste Kupplung C1 mit dem ersten Hohlrad 74 und/oder dem dritten Sonnenrad 92 und/oder der zweiten Kupplung C2 und/oder insbesondere dem zweiten Verbindungselement 498 lösbar verbindbar sein, insbesondere lösbar drehfest und/oder antreibbar verbindbar sein. Das erste Hohlrad 74 ist mit dem dritten Sonnenrad 92 verbunden, insbesondere mit dem oder über das zweite Verbindungselement 498. Das erste Hohlrad 74, und insbesondere das zweite Verbindungselement 498, kann mit der zweiten oder über die zweite Kupplung C2 mit dem zweiten Sonnenrad 82 und/oder der zweiten Bremse B2, insbesondere dem dritten Verbindungselement 110, lösbar verbindbar sein, insbesondere lösbar drehfest und/oder antreibbar verbindbar sein.

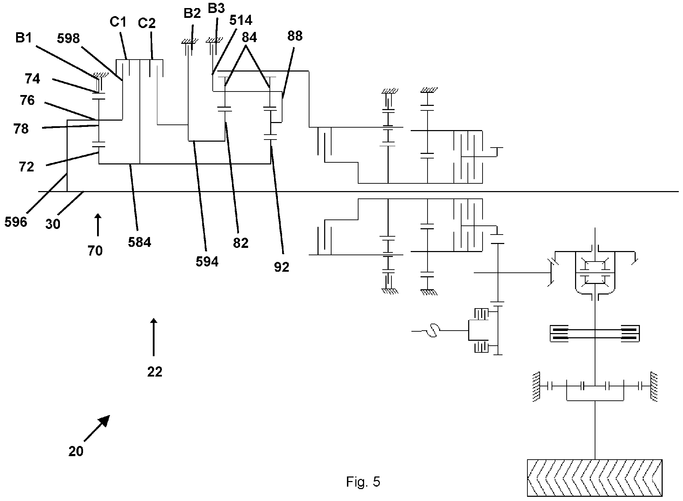

Figur 5 zeigt eine schematische Darstellung eines vierten Ausführungsbeispiels des erfindungsgemässen Getriebes 20. Das in Figur 5 gezeigte Getriebe 20 entspricht im Wesentlichen den in den Figuren 1 bis 4 gezeigten Getrieben 20, sodass im Folgenden lediglich auf Details und/oder Unterschiede eingegangen wird. Das Nutzfahrzeug 10 gemäss Figur 1 kann das Getriebe 20, wie in Figur 5 dargestellt, umfassen. Das Antriebselement 30 ist mit dem ersten Planetenträger 76 verbunden, bevorzugt drehfest und/oder antreibbar verbunden. Das Getriebe 20, insbesondere die Hauptgetriebeeinheit 22, kann ein erstes Verbindungselement 596, insbesondere eine erste Verbindungswelle umfassen. Das erste Verbindungselement 596 kann mit dem Antriebselement 30 und dem ersten Planetenträger 76 verbunden sein, bevorzugt drehfest und/oder antreibbar verbunden sein. Der erste Planetenträger 76 ist mit der ersten Kupplung C1 verbunden oder verbindbar, bevorzugt drehfest und/oder antreibbar verbunden oder verbindbar. Das Getriebe 20, insbesondere die Hauptgetriebeeinheit 22, kann ein zweites Verbindungselement 598, insbesondere eine zweite Verbindungswelle umfassen. Das zweite Verbindungselement 598 kann mit der ersten Kupplung C1 und dem ersten Planetenträger 76 verbunden oder verbindbar sein, bevorzugt drehfest und/oder antreibbar verbunden oder verbindbar sein. Das erste Sonnenrad 72 ist mit dem dritten Sonnenrad 92 und/oder der ersten Kupplung C1 und/oder der zweiten Kupplung C2 verbunden oder verbindbar, bevorzugt drehfest und/oder antreibbar verbunden oder verbindbar. Ebenso kann das Getriebe 20, insbesondere die Hauptgetriebeeinheit 22, ein drittes Verbindungselement 584, insbesondere eine dritte Verbindungswelle umfassen. Das dritte Verbindungselement 584 kann mit dem ersten Sonnenrad 72 und/oder dem dritten Sonnenrad 92 und/oder der ersten Kupplung C1 und/oder der zweiten Kupplung C2 verbunden oder verbindbar sein kann, bevorzugt drehfest und/oder antreibbar verbunden oder verbindbar sein. Darüber hinaus ist die zweite Sonne 82 mit der zweiten Bremse B2 und/oder der zweiten Kupplung C2 verbunden oder verbindbar, insbesondere drehfest und/oder antreibbar verbunden oder verbindbar. Ausserdem kann das Getriebe 20, insbesondere die Hauptgetriebeeinheit 22, ein viertes Verbindungselement 594, insbesondere eine vierte Verbindungswelle umfassen. Das vierte Verbindungselement 594 kann mit der zweiten Bremse B2 und/oder der zweiten Kupplung C2 und dem zweiten Sonnenrad 82 verbunden oder verbindbar sein, bevorzugt drehfest und/oder antreibbar verbunden oder verbindbar sein. Das Getriebe 20, insbesondere die Hauptgetriebeeinheit 22, kann ein fünftes Verbindungselement 514, insbesondere eine fünfte Verbindungswelle umfassen. Das fünfte Verbindungselement 514 kann mit der dritten Bremse B3 und/oder dem gemeinsamen Planetenträger 88 verbunden oder verbindbar sein, bevorzugt drehfest und/oder antreibbar verbunden oder verbindbar sein. Das erste Hohlrad 74 ist mit der ersten Bremse B1 gegen Drehung haltbar, bevorzugt lösbar gegen Drehung haltbar. Das erste Hohlrad 74 kann mit der ersten Bremse B1 an das Hauptgetriebegehäuse 210 koppelbar und/oder mit dem Hauptgetriebegehäuse 210 lösbar verbindbar, bevorzugt lösbar gegen Drehung haltbar sein. Der erste Planetenträger 76, und insbesondere das zweite Verbindungselement 598, kann mit der ersten oder über die erste Kupplung C1 mit dem ersten Sonnenrad 72 und/oder dem dritten Sonnenrad 92 und/oder der zweiten Kupplung C2 und/oder insbesondere dem dritten Verbindungselement 584 lösbar verbindbar, insbesondere drehfest und/oder antreibbar verbindbar sein. Das erste Sonnenrad 72, und insbesondere das dritte Verbindungselement 584, und/oder die erste Kupplung C1 kann mit der zweiten oder über die zweite Kupplung C2 mit dem zweiten Sonnenrad 72 und/oder der zweiten Bremse B2 und/oder insbesondere dem vierten Verbindungselement 594 lösbar verbindbar sein, insbesondere lösbar drehfest und/oder antreibbar verbindbar sein. Das zweite Sonnenrad 82, und insbesondere das vierte Verbindungselement 594, ist mit der zweiten Bremse B2 gegen Drehung haltbar, bevorzugt lösbar gegen Drehung haltbar. Das zweite Sonnenrad 82, und insbesondere das vierte Verbindungselement 594, kann mit der zweiten Bremse B2 an ein Hauptgetriebegehäuse 210 koppelbar und/oder mit dem Hauptgetriebegehäuse 210 lösbar verbindbar sein. Der erste gemeinsame Planetenträger 88 und/oder der gemeinsame Planetensatz 84, und insbesondere das fünfte Verbindungselement 514, sind mit der dritten Bremse B3 gegen Drehung haltbar, bevorzugt lösbar gegen Drehung haltbar. Der gemeinsame Planetenträger 88 und/oder der gemeinsame Planetensatz 84 und/oder insbesondere das fünfte Verbindungselement 514 können mit der dritten Bremse B3 an das Hauptgetriebegehäuse 210 koppelbar und/oder mit dem Hauptgetriebegehäuse 210 lösbar verbindbar sein.

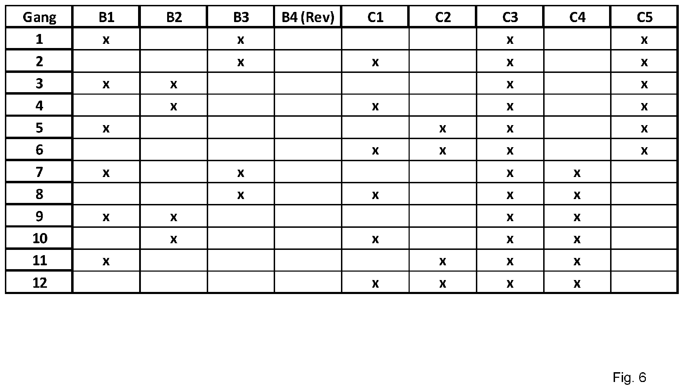

Figur 6 zeigt eine schematische Darstellung eines Schaltschemas des ersten, zweiten, dritten und vierten Ausführungsbeispiels. Das Schaltschema zeigt nur die zwölf Vorwärtsgänge. Die zwölf Rückwärtsgänge ergeben sich, wenn die dritte Kupplung C3 betätigt wird, insbesondere gelöst wird, und die vierte Bremse B4 betätigt wird, insbesondere geschlossen wird. Gemäss dem Schaltschemas ergibt sich der erste Vorwärtsgang durch Betätigen, insbesondere das Schließen, der ersten Bremse B1 und der dritten Bremse B3 und der dritten Kupplung C3 und der fünften Kupplung C5. Der zweite Vorwärtsgang ergibt sich durch Betätigen, insbesondere das Schließen, der dritten Bremse B3 und der ersten Kupplung C1 und der dritten Kupplung C3 und der fünften Kupplung C5. Das Schalten vom ersten Vorwärtsgang in den zweiten Vorwärtsgang erfolgt, indem die ersten Bremse B1 betätigt wird, insbesondere gelöst wird, und die erste Kupplung C1 betätigt wird, insbesondere geschlossen wird. Der dritte Vorwärtsgang ergibt sich durch Betätigen, insbesondere das Schließen, der ersten Bremse B1 und der zweiten Bremse B2 und der dritten Kupplung C3 und der fünften Kupplung C5. Das Schalten vom zweiten Vorwärtsgang in den dritten Vorwärtsgang erfolgt, indem die dritte Bremse B3 und die erste Kupplung betätigt werden, insbesondere gelöst werden, und die erste und zweite Bremse B1, B2 betätigt werden. Der vierte Vorwärtsgang ergibt sich durch Betätigen, insbesondere das Schließen, der zweiten Bremse B2 und der ersten Kupplung C1 und der dritten Kupplung C3 und der fünften Kupplung C5. Das Schalten vom dritten Vorwärtsgang in den vierten Vorwärtsgang erfolgt, indem die erste Bremse B1 betätigt wird, insbesondere gelöst werden, und die erste Kupplung C1 betätigt wird, insbesondere geschlossen wird. Der fünfte Vorwärtsgang ergibt sich durch Betätigen, insbesondere das Schließen, der ersten Bremse B1 und der zweiten Kupplung C2 und der dritten Kupplung C3 und der fünften Kupplung C5. Das Schalten vom vierten Vorwärtsgang in den fünften Vorwärtsgang erfolgt, indem die zweite Bremse B2 und die erste Kupplung C1 betätigt werden, insbesondere gelöst werden, und die erste Bremse B1 und zweite Kupplung C2 betätigt werden, insbesondere geschlossen werden. Der sechste Vorwärtsgang ergibt sich durch Betätigen, insbesondere das Schließen, der ersten Kupplung C1 und der zweiten Kupplung C2 und der dritten Kupplung C3 und der fünften Kupplung C5. Das Schalten vom fünften Vorwärtsgang in den sechsten Vorwärtsgang erfolgt, indem die erste Bremse B1 betätigt wird, insbesondere gelöst wird, und die erste Kupplung C1 betätigt wird, insbesondere geschlossen wird. Der siebte Vorwärtsgang ergibt sich durch Betätigen, insbesondere das Schließen, der ersten Bremse B1 und der dritten Bremse B3 und der dritten Kupplung C3 und der vierten Kupplung C4. Das Schalten vom sechsten Vorwärtsgang in den siebten Vorwärtsgang erfolgt, indem die erste, zweite und sechste Kupplung C1, C2, C6 betätigt werden, insbesondere gelöst werden, und die erste und dritte Bremse B1, B3 und die vierten Kupplung C4 betätigt werden, insbesondere geschlossen werden. Der achte Vorwärtsgang ergibt sich durch Betätigen, insbesondere das Schließen, der dritten Bremse B3 und der ersten Kupplung C1 und der dritten Kupplung C3 und der vierten Kupplung C4. Das Schalten vom siebten Vorwärtsgang in den achten Vorwärtsgang erfolgt, indem die erste Bremse B1 betätigt, insbesondere gelöst wird, und die erste Kupplung C1 betätigt, insbesondere geschlossen wird. Der neunte Vorwärtsgang ergibt sich durch Betätigen, insbesondere das Schließen, der ersten Bremse B1 und der zweiten Bremse B2 und der dritten Kupplung C3 und der vierten Kupplung C4. Das Schalten vom achten Vorwärtsgang in den neunten Vorwärtsgang erfolgt, indem die dritte Bremse B3 und die erste Kupplung C1 betätigt werden, insbesondere gelöst werden, und die erste und zweite Bremse B1, B2 betätigt, insbesondere geschlossen werden. Der zehnte Vorwärtsgang ergibt sich durch Betätigen, insbesondere das Schließen, der zweiten Bremse B2 und der ersten Kupplung C1 und der dritten Kupplung C3 und der vierten Kupplung C4. Das Schalten vom neunten Vorwärtsgang in den zehnten Vorwärtsgang erfolgt, indem die erste Bremse B1 betätigt, insbesondere gelöst wird, und die erste Kupplung C1 betätigt, insbesondere geschlossen wird. Der elfte Vorwärtsgang ergibt sich durch Betätigen, insbesondere das Schließen, der ersten Bremse B1 und der zweiten Kupplung C2 und der dritten Kupplung C3 und der vierten Kupplung C4. Das Schalten vom zehnten Vorwärtsgang in den elften Vorwärtsgang erfolgt, indem die zweite Bremse B2 und die erste Kupplung C1 betätigt, insbesondere gelöst werden, und die erste Bremse B1 und zweite Kupplung C2 betätigt, insbesondere geschlossen werden. Der zwölfte Vorwärtsgang ergibt sich durch Betätigen, insbesondere das Schließen, der ersten Kupplung C1 und der zweiten Kupplung C2 und der dritten Kupplung C3 und der vierten Kupplung C4. Das Schalten vom elften Vorwärtsgang in den zwölften Vorwärtsgang erfolgt, indem die erste Bremse B1 betätigt, insbesondere gelöst wird, und die erste Kupplung C1 betätigt, insbesondere geschlossen wird.

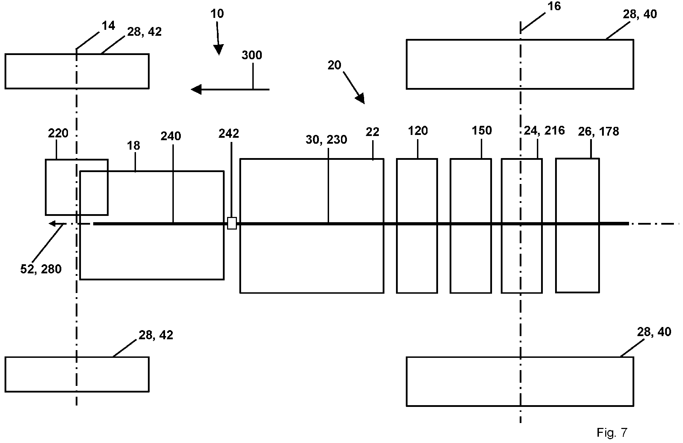

Figur 7 zeigt eine schematische Darstellung eines zweiten Ausführungsbeispiels des erfindungsgemässen Nutzfahrzeugs 10 mit erfindungsgemässem Getriebe 20. Das in Figur 7 gezeigte Nutzfahrzeug 10 und Getriebe 20 entsprechen im Wesentlichen den in den Figuren 1 bis 6 gezeigten Nutzfahrzeugen 10 und Getrieben 20, sodass im Folgenden lediglich auf Details und/oder Unterschiede eingegangen wird. Das in Figur 7 gezeigte zweite Ausführungsbeispiel des Nutzfahrzeugs kann die in den Figuren 2 bis 5 gezeigten Getriebe umfassen. Entgegen der Vorwärtsfahrrichtung 300 des Nutzfahrzeugs 10 und/oder in Richtung oder entlang der Längsachse 52 sind die Komponenten oder Module des Getriebes 20 und/oder Nutzfahrzeugs 10 wie folgt hintereinander, insbesondere direkt hintereinander und/oder benachbart angeordnet. Zunächst der Antriebsmotor 18, dann das Getriebe 20 mit der Hauptgetriebeeinheit 22 und der Reversiereinheit 120 und dem Zwischengetriebe 150, dahinter das Hinterachsmodul 24 und hinter dem Hinterachsmodul 24 das Zapfwellenmodul 26. Im Speziellen kann das Getriebe 20 derart im Nutzfahrzeug 10 angeordnet sein, dass eine Getriebelängsachse 280 im Wesentlichen parallel oder koaxial zur Fahrzeuglängsachse 52 ist. Der Kraft- und Drehmomentfluss des Nutzfahrzeugs kann wie folgt beschrieben werden. Zunächst wird vom Antriebsmotor 18 über die Kurbelwelle 240 ein Kraft- Drehmomentfluss an das Antriebselement 30 erzeugt. Die Kurbelwelle 240 kann mit dem Antriebselement 30 entweder direkt oder beispielsweise mit einem Koppelelement 162 oder mittels einer Koppelwelle (nicht dargestellt) oder mit einer verzahnten oder geschraubten Verbindung verbunden und/oder antreibbar sein. Dadurch ist das Antriebselement 30 mit der Kurbelwelle 240 antreibbar und eine Kraft und/oder ein Drehmoment von der Kurbelwelle 240 auf das Antriebselement 30 übertragbar. Der Kraft- und Drehmomentfluss kann somit vom Antriebselement 30 an die Hauptgetriebeeinheit 22 von der Hauptgetriebeeinheit 22 über die Reversiereinheit 120 an das Zwischengetriebe 150 an das Abtriebselement 32 und von dort an das Hinterachsmodul 26 und/oder an das Vorderachsmodul 220 weitergegeben, sodass eine Drehbewegung der hinteren und/oder vorderen Antriebsachse 14, 16 und somit eine Bewegung der Bodeneingriffsmittel 28, insbesondere eine Drehbewegung der hinteren und vorderen Räder 40, 42 herstellbar ist. Ebenso kann aber auch ein Kraft- und Drehmomentfluss vom Abtriebselement 32 an das Hinterachsmodul und/oder von einem weiteren Abtriebselement 190 an das Vorderachsmodul 220 hergestellt bzw. erzeugt werden.

Die im Folgenden genannten Vorteile gelten für alle gezeigten Figuren. Von Vorteil wird mit dem erfindungsgemässen Getriebe 20, insbesondere da eine minimale Anzahl an Zahnrädern, Kupplungen und Bremsen für das Getriebe 20 benötigt wird, eine einfache konstruktive Ausbildung und/oder eine ausreichende Anzahl an Übersetzungen des Getriebes 20 und des Nutzfahrzeugs 10 erreicht. Aufgrund der hohen Packungsdichte der Getriebekomponenten des Getriebes 20 in axiale und laterale Richtung weist das Getriebe 20 vorteilhafterweise eine kompakte Bauweise mit minimalem Bauraum auf. Ebenso wird zusätzlicher Bauraum für Bauteile außerhalb des Getriebes 20 ermöglicht. Gleichzeitig kann eine optimale Anzahl an Gängen erreicht werden. Darüber hinaus können die Materialkosten für das Getriebe 20 aufgrund der optimierten Bauweise reduziert werden.

## Patentansprüche

1. Getriebe zum Übertragen eines von einem Antriebsmotor (18) erzeugten Drehmoments auf mindestens eine vordere und/oder eine hintere Antriebsachse (14, 16) eines landwirtschaftlichen oder industriellen Nutzfahrzeugs (10), wobei das Getriebe ein Antriebselement (30) und ein erstes Abtriebselement (32) und eine Hauptgetriebeeinheit (22) und ein Zwischengetriebe (120) und eine Reversiereinheit (150) umfasst, und die Hauptgetriebeeinheit (22) einen ersten Planetenradsatz (70) mit einem ersten Sonnenrad (72), einem ersten Hohlrad (74), einem ersten Planetenträger (76) und einem ersten Planetensatz (78), und einen zweiten Planetenradsatz (80) mit einem zweiten Sonnenrad (82), und einen dritten Planetenradsatz (90) mit einem dritten Sonnenrad (92) und einem dritten Planentensatz (94) umfasst, wobei das Zwischengetriebe (150) einen fünften Planetenradsatz (160) mit einem fünften Sonnenrad (162), einem fünften Hohlrad (164), einem fünften Planetenträger (166) und einem fünften Planetensatz (168) aufweist, und die Reversiereinheit (120) einen vierten Planetenradsatz (130) mit einem vierten Sonnenrad (132), einem vierten Hohlrad (134), einem vierten Planetenträger (136) und einem vierten Planetensatz (138) umfasst, und das Zwischengetriebe (150) genau zwei Schaltelementen (C4, C5) und die Reversiereinheit (120) genau zwei Schaltelementen (B4, C3) umfasst, und die Reversiereinheit (120) in Richtung des Kraft- und Drehmomentflusses nach der Hauptgetriebeeinheit (22) angeordnet ist, **dadurch gekennzeichnet dass**
der zweite und dritte Planetenradsatz (80, 90) einen ersten gemeinsamen Planetensatz (84) und ein erstes gemeinsames Hohlrad (86) und einen ersten gemeinsamen Planetenträger (88) aufweisen, die Hauptgetriebeeinheit (22) genau fünf Schaltelement (B1, B2, B3, C1, C2) umfasst, wobei die Schaltelemente (B1, B2, B3, C1, C2) eine erste Bremse (B1) und eine zweite Bremse (B2) und eine dritte Bremse (B3) und eine erste Kupplung (C1) und eine zweite Kupplung (C2) sind, und mindestens zwei Schaltelemente (B1, B2, B3, C1, C2) der Hauptgetriebeeinheit (22) und genau ein Schaltelement (C4, C5) des Zwischengetriebes (150) und genau ein Schaltelement (B4, C3) der Reversiereinheit (120) in Kombinationen von mindestens vier Schaltelementen (B1, B2, B3, B4, C1, C2, C3, C4, C5) betätigbar sind, um genau zwölf Vorwärtsgänge zwischen dem Antriebselement (30) und dem ersten Abtriebselement (32) herzustellen, und das Antriebselement (30) mit dem ersten Hohlrad (74) verbunden ist, und das Antriebselement (30) mit der ersten Kupplung (C1) mit dem dritten Sonnenrad (92) lösbar verbindbar ist, und der erste Planetenträger (76) mit der zweiten Kupplung (C2) mit dem zweiten Sonnenrad (82) lösbar verbindbar ist.

2. Getriebe nach Anspruch 1, **dadurch gekennzeichnet, dass** das Zwischengetriebe (150) in Richtung des Kraft- und Drehmomentflusses nach der Hauptgetriebeeinheit (22) und vor der Reversiereinheit (120) angeordnet ist oder die Reversiereinheit (120) in Richtung des Kraft- und Drehmomentflusses nach der Hauptgetriebeeinheit (22) und vor dem Zwischengetriebe (150) angeordnet ist.

3. Getriebe nach mindestens einem der Ansprüche 1 bis 2, **dadurch gekennzeichnet, dass** die Schaltelemente der Reversiereinheit (120) eine dritte Kupplung (C3) und eine vierte Bremse (B4) sind.

4. Getriebe nach mindestens einem der Ansprüche 1 bis 3, **dadurch gekennzeichnet, dass** die Schaltelemente des Zwischengetriebes (150) eine vierte Kupplung (C4) und eine fünfte Kupplung (C5) sind.

5. Getriebe nach mindestens einem der vorangehenden Ansprüche, **dadurch gekennzeichnet, dass** das erste Abtriebselement (32) mit einem zweiten Zwischenelement (170) antreibbar verbunden oder verbindbar ist.

6. Getriebe nach mindestens einem der vorangehenden Ansprüche, **dadurch gekennzeichnet, dass** das Getriebe (20) ein zweites Abtriebselement (190) umfasst.

7. Getriebe nach mindestens einem der vorangehenden Ansprüche, **dadurch gekennzeichnet, dass** das Getriebe (20) ein die Hauptgetriebeeinheit (22) aufnehmendes Hauptgetriebegehäuse (210) und/oder ein die Reversiereinheit (120) aufnehmendes Reversiereinheitsgehäuse (212) und/oder ein das Zwischengetriebe (150) aufnehmendes Zwischengetriebegehäuse (214) und/oder ein Hinterachsmodul (24) aufnehmendes Hinterachsgehäuse (216) umfasst.

8. Getriebe nach mindestens einem der vorangehenden Ansprüche, **dadurch gekennzeichnet, dass** das Hinterachsmodul (24) mindestens teilweise oder ganz ein Hinterachsdifferential (170) und/oder die hintere Antriebsachse (16) umfasst.

9. Getriebe nach mindestens einem der vorangehenden Ansprüche, **dadurch gekennzeichnet, dass** das Getriebe (20) ein Zapfwellenmodul (26) umfasst, und/oder das Hinterachsmodul (24) zwischen dem Zapfwellenmodul (26) und der Hauptgetriebeeinheit (22) angeordnet ist, und/oder das Getriebe (20) eine Zapfwellen-Antriebswelle (150) umfasst.

10. Landwirtschaftliches oder industrielles Nutzfahrzeug, insbesondere ein Traktor oder Schlepper, umfassend ein Getriebe (20) nach einem der Ansprüche 1 bis 9.

11. Landwirtschaftliches oder industrielles Nutzfahrzeug nach Anspruch 10, **dadurch gekennzeichnet, dass** das Getriebe (20) derart im Nutzfahrzeug (10) angeordnet ist, dass eine Getriebelängsachse (280) im Wesentlichen parallel oder kongruent zu einer Fahrzeuglängsachse (52) ist.

## Claims

1. Transmission for transmitting a torque generated by a drive motor (18) to at least one front and/or one rear drive axle (14, 16) of an agricultural or industrial commercial vehicle (10), wherein the transmission comprises a drive element (30) and a first output element (32) and a main transmission unit (22) and an intermediate transmission (120) and a reversing unit (150), and the main transmission unit (22) comprises a first planetary gear set (70) with a first sun gear (72), a first ring gear (74), a first planet carrier (76) and a first planetary set (78), and a second planetary gear set (80) with a second sun gear (82), and a third planetary gear set (90) with a third sun gear (92) and a third planetary set (94),
wherein the intermediate transmission (150) has a fifth planetary gear set (160) with a fifth sun gear (162), a fifth ring gear (164), a fifth planet carrier (166) and a fifth planetary set (168), and the reversing unit (120) comprises a fourth planetary gear set (130) with a fourth sun gear (132), a fourth ring gear (134), a fourth planet carrier (136) and a fourth planetary set (138), and the intermediate transmission (150) comprises exactly two switching elements (C4, C5), and the reversing unit (120) comprises exactly two switching elements (B4, C3), and the reversing unit (120) is disposed in the direction of the force and torque flux downstream of the main transmission unit (22), **characterized in that** the second and the third planetary gear set (80, 90) have a first common planetary set (84) and a first common ring gear (86) and a first common planet carrier (88), the main transmission unit (22) comprising exactly five switching elements (B1, B2, B3, C1, C2), wherein the switching elements (B1, B2, B3, C1, C2) are a first brake (B1) and a second brake (B2) and a third brake (B3) and a first clutch (C1) and a second clutch (C2),
and at least two switching elements (B1, B2, B3, C1, C2) of the main transmission unit (22) and exactly one switching element (C4, C5) of the intermediate transmission (150) and exactly one switching element (B4, C3) of the reversing unit (120) are activatable in combinations of at least four switching elements (B1, B2, B3, B4, C1, C2, C3, C4, C5) so as to establish exactly twelve forward gears between the drive element (30) and the first output element (32).
and the drive element (30) is connected to the first ring gear (74), and the drive element (30) is releasably connectable to the third sun gear (92) by way of the first clutch (C1), and the first planet carrier (76) is releasably connectable to the second sun gear (82) by way of the second clutch (C2).

2. Transmission according to Claim **1, characterized in that** the intermediate transmission (150) is disposed in the direction of the force and torque flux downstream of the main transmission unit (22) and upstream of the reversing unit (120), or the reversing unit (120) is disposed in the direction of the force and torque flux downstream of the main transmission unit (22) and upstream of the intermediate transmission (150).

3. Transmission according to at least one of Claims 1 to 2, **characterized in that** the switching elements of the reversing unit (120) are a third clutch (C3) and a fourth brake (B4).

4. Transmission according to at least one of Claims 1 to 3, **characterized in that** the switching elements of the intermediate transmission (150) are a fourth clutch (C4) and a fifth clutch (C5).

5. Transmission according to at least one of the preceding claims, **characterized in that** the first output element (32) is connected, or able to be connected, in a drivable manner to a second intermediate element (170).

6. Transmission according to at least one of the preceding claims, **characterized in that** the transmission (20) comprises a second output element (190).

7. Transmission according to at least one of the preceding claims, **characterized in that** the transmission (20) comprises a main transmission housing (210) which receives the main transmission unit (22), and/or a reversing unit housing (212) which receives the reversing unit (120), and/or an intermediate transmission housing (214) which receives the intermediate transmission (150), and/or a rear axle housing (216) which receives a rear axle module (24).

8. Transmission according to at least one of the preceding claims, **characterized in that** the rear axle module (24) at least partially or completely comprises a rear axle differential (170) and/or the rear drive axle (16).

9. Transmission according to at least one of the preceding claims, **characterized in that** the transmission (20) comprises a power take-off module (26), and/or the rear axle module (24) is disposed between the power take-off module (26) and the main transmission unit (22), and/or the transmission (20) has a power take-off drive shaft (150).

10. Agricultural or industrial commercial vehicle, in particular a tractor or hauler, comprising a transmission (20) according to one of Claims 1 to 9.

11. Agricultural or industrial commercial vehicle according to Claim 10, **characterized in that** the transmission (20) is disposed in the commercial vehicle (10) in such a manner that a transmission longitudinal axis (280) is substantially parallel to or congruent with a vehicle longitudinal axis (52).

## Revendications

1. Transmission destinée à transmettre un couple de rotation généré par un moteur d'entraînement (18) sur au moins un essieu d'entraînement avant et/ou arrière (14, 16) d'un véhicule utilitaire agricole ou industriel (10), la transmission comprenant un élément d'entraînement (30) et un premier élément de sortie (32) et une unité de transmission principale (22) et une transmission intermédiaire (120) et une unité d'inversion (150), et l'unité de transmission principale (22) comprenant un premier train de pignons satellites (70) avec une première roue solaire (72), une première couronne (74), un premier porte-pignons satellites (76) et un premier train planétaire (78), et un deuxième train de pignons satellites (80) avec une deuxième roue solaire (82), et un troisième train de pignons satellites (90) avec une troisième roue solaire (92) et une troisième train planétaire (94),
la transmission intermédiaire (150) comportant un cinquième train de pignons satellites (160) avec une cinquième roue solaire (162), une cinquième couronne (164), un cinquième porte-pignons satellites (166) et un cinquième train planétaire (168), et l'unité d'inversion (120) comprenant un quatrième train de pignons satellites (130) avec une quatrième roue solaire (132), une quatrième couronne (134), un quatrième porte-pignons satellites (136) et un quatrième train planétaire (138), et la transmission intermédiaire (150) comprenant exactement deux éléments de changement de vitesse (C4, C5) et l'unité d'inversion (120) comprenant exactement deux éléments de changement de vitesse (B4, C3), et l'unité d'inversion (120) étant disposée après l'unité de transmission principale (22) en direction du flux de force et de couple de rotation, **caractérisée en ce que** le deuxième et le troisième train de pignons satellites (80, 90) comportent un premier train planétaire commun (84) et une première couronne commune (86) et un premier porte-pignons satellites commun (88), l'unité de transmission principale (22) comprend exactement cinq élément de changement de vitesse (B1, B2, B3, C1, C2), les éléments de changement de vitesse (B1, B2, B3, C1, C2) étant un premier frein (B1) et une deuxième frein (B2) et un troisième frein (B3) et un premier embrayage (C1) et un deuxième embrayage (C2),
et au moins deux éléments de changement de vitesse (B1, B2, B3, C1, C2) de l'unité de transmission principale (22) et exactement un élément de changement de vitesse (C4, C5) de la transmission intermédiaire (150) et exactement un élément de changement de vitesse (B4, C3) de l'unité d'inversion (120) peuvent être actionnés dans des combinaisons d'au moins quatre éléments de changement de vitesse (B1, B2, B3, B4, C1, C2, C3, C4, C5) pour établir exactement douze rapports de marche avant entre l'élément d'entraînement (30) et le premier élément de sortie (32),
et l'élément d'entraînement (30) est relié à la première couronne (74) et l'élément d'entraînement (30) peut être relié de manière amovible à la troisième roue solaire (92) avec le premier embrayage (C1), et le premier porte-pignons satellites (76) peut être relié de manière amovible à la deuxième roue solaire (82) par le deuxième embrayage (C2).

2. Transmission selon la revendication 1, **caractérisée en ce que** la transmission intermédiaire (150) est disposée après l'unité de transmission principale (22) et avant l'unité d'inversion (120) en direction du flux de force et de couple de rotation, ou l'unité d'inversion (120) est disposée après l'unité de transmission principale (22) et avant la transmission intermédiaire (150) en direction du flux de force et de couple de rotation.

3. Transmission selon au moins l'une des revendications 1 à 2, **caractérisée en ce que** les éléments de changement de vitesse de l'unité d'inversion (120) sont un troisième embrayage (C3) et un quatrième frein (B4).

4. Transmission selon au moins l'une des revendications 1 à **3, caractérisée en ce que** les éléments de changement de vitesse de la transmission intermédiaire (150) sont un quatrième embrayage (C4) et un cinquième embrayage (C5).

5. Transmission selon au moins l'une des revendications précédentes, **caractérisée en ce que** le premier élément de sortie (32) est relié ou peut être relié de manière à pouvoir être entraîné à un deuxième élément intermédiaire (170).

6. Transmission selon au moins l'une des revendications précédentes, **caractérisée en ce que** la transmission (20) comprend un deuxième élément de sortie (190).

7. Transmission selon au moins l'une des revendications précédentes, **caractérisée en ce que** la transmission (20) comprend un boîtier de transmission principale (210) recevant l'unité de transmission principale (22) et/ou un boîtier **d'unité d'inversion** (212) recevant l'unité d'inversion (120) et/ou un boîtier de transmission intermédiaire (214) recevant la transmission intermédiaire (150) et/ou un boîtier d'essieu arrière (216) recevant le module d'essieu arrière (24).

8. Transmission selon au moins l'une des revendications précédentes, **caractérisée en ce que** le module d'essieu arrière (24) comprend au moins en partie ou en totalité un différentiel (170) d'essieu arrière et/ou l'essieu d'entraînement arrière (16).

9. Transmission selon au moins l'une des revendications précédentes, **caractérisée en ce que** la transmission (20) comprend un module de prise de force (26) et/ou le module d'essieu arrière (24) est disposé entre le module de prise de force (26) et l'unité de transmission principale (22) et/ou la transmission (20) comprend un arbre d'entraînement de prise de force (150).

10. Véhicule utilitaire agricole ou industriel, en particulier tracteur ou semi-remorque, comprenant une transmission (20) selon l'une des revendications 1 à 9.

11. Véhicule utilitaire agricole ou industriel selon la revendication 10, **caractérisé en ce que** la transmission (20) est disposée de telle manière dans le véhicule utilitaire (10) qu'un essieu longitudinal de transmission (280) est sensiblement parallèle ou congruent par rapport à un essieu longitudinal de véhicule (52).
